# EUROPEAN PATENT SPECIFICATION

(11) **EP 4 490 672 B1**
(45) Date of publication and mention of the grant of the patent: **18.03.2026**
(21) Application number: 23708136.9
(22) Date of filing: 06.03.2023
(51) Int. Cl.: G06N 10/40

(54) **A QUDIT PROCESSING METHOD**
VERFAHREN ZUR QUDIT-VERARBEITUNG
PROCÉDÉ DE TRAITEMENT DE QUDITS

(30) Priority: 08.03.2022 EP 22160868
(43) Date of publication of application: 15.01.2025
(60) Divisional application: 25181873.8
(73) Proprietor: Quantum Motion Technologies Limited, London N7 9HJ (GB)
(72) Inventor: BENJAMIN, Simon, Harrogate HG1 2PW (GB); CAI, Zhenyu, Harrogate HG1 2PW (GB)
(74) Representative: Gill Jennings & Every LLP
(86) International application number: PCT/EP2023/055557
(87) International publication number: WO 2023/169979

(56) References cited:
- CRAWFORD O ET AL: "Compilation and scaling strategies for a silicon quantum processor with sparse two-dimensional connectivity", ARXIV.ORG, CORNELL UNIVERSITY LIBRARY, 201 OLIN LIBRARY CORNELL UNIVERSITY ITHACA, NY 14853, 8 January 2022 (2022-01-08), XP091132412
- JELMER M BOTER ET AL: "The spider-web array--a sparse spin qubit array", ARXIV.ORG, CORNELL UNIVERSITY LIBRARY, 201 OLIN LIBRARY CORNELL UNIVERSITY ITHACA, NY 14853, 1 October 2021 (2021-10-01), XP091071117
- GUTIERREZ ET AL: "Transversality and lattice surgery: exploring realistic routes towards coupled logical qubits with trapped-ion quantum processors", ARXIV.ORG, CORNELL UNIVERSITY LIBRARY, 201 OLIN LIBRARY CORNELL UNIVERSITY ITHACA, NY 14853, 22 January 2018 (2018-01-22), XP081133382, DOI: 10.1103/PHYSREVA.99.022330
- ZHENYU CAI ET AL: "Looped Pipelines Enabling Effective 3D Qubit Lattices in a Strictly 2D Device", ARXIV.ORG, CORNELL UNIVERSITY LIBRARY, 201 OLIN LIBRARY CORNELL UNIVERSITY ITHACA, NY 14853, 24 March 2022 (2022-03-24), XP091183834

## Description

### FIELD OF THE INVENTION

The present invention relates to a qudit processor and qudit processing methods.

### BACKGROUND TO THE INVENTION

Quantum computation involves the manipulation and processing of qubits. A qubit, or a quantum bit, is the quantum parallel to the classical "bit" used in classical computing, and contains information. There are a number of possible quantum computing schemes that can be used to process qubits. A qubit is generally understood to be a two-state quantum system. More generally quantum computations can be performed using quantum dits or "qudits" in which the number of states is an integer that is greater than or equal to two. A qutrit is another example of a qudit in which the number of states is equal to three.

Qubits are typically arranged in an array in a qubit processor. Examples of qubits include silicon spin qubits and trapped-ions qubits. In these examples, the native entangling operations are short-range. Therefore, in order to allow two qubits within the array to interact, they need to be brought into close proximity. To enable interactions between qubits, the array of qubits may be close-packed. However, addressing qubits in a close-packed array may lead to crosstalk, i.e. unwanted interactions between qubits.

In the near-term intermediate-scale quantum computing, or NISQ, era, the number and density of qubits on each device is increasing. It is possible, for example using silicon metal-oxide-semiconductor, SiMOS, devices, to create dense two-dimensional grids of electron spin qubits.

In a typical design, the number of classical control lines required to address qubits in the array will scale with the area of the array, i.e. the number of qubits in the array, whereas the available spaces for positioning the classical control lines scales with the perimeter of the array. The increasing number and density of qubits leads to challenges in the classical wiring of the processor and problems with heat dissipation.

In order to reduce crosstalk, the qubits in the array can be spaced out. Interactions between qubits can then be enabled by bringing the relevant qubits close together. The movement of qubits can be enabled by shuttling, for example.

However, spacing out the qubits in this way reduces the qubit density in the qubit processor. This therefore reduces the number of qubits that can fit onto a single integrated platform such as a silicon chip.

It is desirable to create an improved qubit processor and processing method. "Compilation and scaling strategies for a silicon quantum processor with sparse two-dimensional connectivity", Crawford *et al.,* arXiv:2201.02877v1 [quant-ph], discloses compilation strategies for sparsely-connected 2d qubit arrangements and a spin-qubit architecture with minimal compilation overhead.

### SUMMARY OF THE INVENTION

The invention is set out in independent claims 1 and 9. Preferred aspects of the invention are set out in the dependent claims. An aspect of the invention provides a method for performing quantum computations in a qudit processor. The method comprises receiving a plurality of qudits at manipulation devices in respective pre-defined separate tracks. Receiving a plurality of qudits at manipulation devices in respective pre-defined separate tracks comprises: receiving a first qudit at a manipulation device in a first pre-defined track; receiving a second qudit at a manipulation device in a second pre-defined track, wherein at least a portion of the second track is within a quantum interaction distance from the first track; receiving a third qudit at a manipulation device in a third pre-defined track, wherein at least a portion of the third track is within the quantum interaction distance from the first track; and receiving a fourth qudit at a manipulation device in a fourth pre-defined track, wherein at least a portion of the fourth track is within the quantum interaction distance from the first track. The method further comprises: manipulating the state of the plurality of qudits at the manipulation device in their respective tracks; transferring the plurality of qudits from the manipulation device to a first location in their respective tracks; enabling interaction between the first qudit and the second qudit when the first qudit is at the first location in the first track and the second qudit is at the first location in the second track by positioning the first location in the first track and the first location in the second track within the quantum interaction distance; transferring the plurality of qudits from the first location to a second location in their respective tracks; enabling interaction between the first qudit and the third qudit when the first qudit is at the second location in the first track and the third qudit is at the second location in the third track by positioning the second location in the first track and the second location in the third track within the quantum interaction distance; transferring the plurality of qudits from the second location to a third location in their respective tracks; and enabling interaction between the first qudit and the fourth qudit when the first qudit is at the third location in the first track and the fourth qudit is at the third location in the fourth track by positioning the third location in the first track and the third location in the fourth track within the quantum interaction distance. The method further comprises either: transferring the plurality of qudits from the third location to the first location in their respective tracks; and enabling interaction between the first qudit and the second qudit when the first qudit is at the first location in the first track and the second qudit is at the first location in the second track; or: transferring the plurality of qudits from the third location to the manipulation device in their respective tracks; and manipulating the state of the plurality of qudits at the manipulation device in their respective tracks.

Advantageously, this method provides synchronized cyclic shuttling for a plurality of qudits. Each qudit within the plurality of qudits is transferred from one location to the next within a pre-defined track, and the relative arrangement of tracks enables interactions periodically between pairs of qudits within the plurality of qudits.

According to this method, the first qudit is transferred around the first pre-defined track from the manipulation device in the first track, to the first location, then to the second location, and further to the third location. From the third location in the first track, the first qudit is transferred either back to the manipulation device or directly to the first location. The first qudit may then continue to be transferred around the first track, from one location to the next in the track.

The manipulation device may comprise an initialisation device, a readout device and/or a gate device. The manipulation device in each track may not be the same. Typically, if the manipulation device comprises an initialisation device, manipulating the state of the qudit comprises initialising the state of the qudit. Typically, if the manipulation device comprises a readout device, manipulating the state of the qudit comprises reading out, i.e. measuring, the state of the qudit. Typically, if the manipulation device comprises a gate device, manipulating the state of the qudit comprises performing a gate operation on the state of the qudit. The gate operation may comprise an X-, Y- or Z-rotation, a Hadamard gate, a phase shift, or any other known quantum operation.

Optionally, the manipulation device in a track can be configured to initialise, read out, and operate on the state of the qudit. Optionally, the manipulation device in a track may comprise multiple manipulation elements, each element configured to initialise, read out, or operate on the state of the qudit. Optionally, the manipulation device may have multiple functions but manipulating the state of the qudit at said manipulation device may only comprise performing a subset of the possible functions of the manipulation device.

The second, third and fourth qudits proceed in a similar manner in their respective tracks. Optionally, there may be more than four qudits and more than four tracks, typically with one qudit in each track, wherein each qudit may proceed in a similar manner in their respective tracks. That is, the n-th qudit may be transferred around the n-th pre-defined track from the manipulation device in the n-th track, to the first location, then to the second location, and further to the third location. From the third location in the n-th track, the n-th qudit may be transferred either to the manipulation device or to the first location. The n-th qudit may then continue to be transferred around the n-th track, from one location to the next in the track. Typically, there are at least fifty tracks, and optionally there may be up to several thousands of tracks. In an ideal system there is no upper limit to the number of tracks that could be present.

The second, third and fourth pre-defined tracks are typically positioned within the qudit processor such that at least a portion of each of the second, third and fourth pre-defined tracks is within a quantum interaction distance from the first track. The quantum interaction distance is the separation between two qudits that enables an interaction between the two qudits. An interaction may be enabled directly or indirectly. Typically, for silicon spin qudits, the quantum interaction distance required for a direct interaction is between 1 nanometres and 100 nanometres, preferably between 5 nanometres and 50 nanometres. For electron spin qudits stored in quantum wells, the separation is preferably defined as the separation between the centres of the quantum wells where the electrons are located. The quantum interaction distance is typically approximately the same as the size of each quantum well. Optionally, interactions may be enabled indirectly using a mediator dot, preferably positioned between the two interacting qudits. In this example, the quantum interaction distance may be greater than 100 nanometres. For a direct interaction, in one example, there is overlap between the wave functions of the qudits in the pair of interacting qudits. For a mediated interaction, in one example, mediated by a mediator dot, there is wave function overlap for each qudit in the pair of qudits with the mediator dot.

At least a portion of the second track is within the quantum interaction distance from the first track. Preferably, said portion of the second track includes the first location in the second track. Typically, the second location and the third location in the second track are not within the quantum interaction distance from the first track.

At least a portion of the third track is within the quantum interaction distance from the first track. Preferably, said portion of the third track includes the second location in the third track. Typically, the first location and the third location in the third track are not within the quantum interaction distance from the first track.

At least a portion of the fourth track is within the quantum interaction distance from the first track. Preferably, said portion of the fourth track includes the third location in the fourth track. Typically, the first location and the second location in the fourth track are not within the quantum interaction distance from the first track. Typically, the first location of the first track is closest to the first location of the second pre-defined track. Typically, the second location of the first track is closest to the second location of the third pre-defined track. Typically, the third location of the first track is closest to the third location of the fourth pre-defined track.

The relative positioning of the pre-defined tracks allows interactions to be enabled between the first qudit and the second, third and fourth qudits at the first, second and third locations in the tracks respectively. An interaction between a pair of qudits is typically enabled by positioning the locations of said qudits within the quantum interaction distance.

Additional pre-defined tracks may be provided for additional qudits. At least a portion of each additional track is preferably within the quantum interaction distance of another track. The another track may be the first, second, third or fourth track. For example, at least a portion of a fifth track may be within the quantum interaction distance from the second track. Optionally, at least another portion of the fifth track may be within the quantum interaction distance from the third track.

In each pre-defined track, the third location is preferably the final location within each track. Typically there are a plurality of intermediate locations between the first and second locations and/or between the second and third locations within each track. Optionally, the number of intermediate locations, and therefore the total number of locations, in the first track may be different from the number of intermediate locations (and the total) in the second track. Alternatively, the number of locations in each track may be the same.

Advantageously, this method provides synchronized cyclic shuttling for an array of qudits. The array of qudits comprises the first, second, third and fourth qudits in the plurality of qudits. Each qudit within the array is transferred from one location to the next within a pre-defined track, and the relative arrangement of tracks enables interactions periodically between pairs of qudits within the array. The method also advantageously reduces crosstalk due to the separation of non-interacting qudits.

Preferably, the plurality of qudits is a first plurality of qudits and the method further comprises, after the step of transferring the first plurality of qudits from the first location to the second location in their respective tracks: receiving a second plurality of qudits at the first locations in the respective pre-defined tracks such that each track comprises two qudits. Each qudit of the second plurality of qudits follows the corresponding qudit of the first plurality of qudits in their respective tracks.

Advantageously, this reduces the space required to process qudits. When there are two pluralities of qudits within the pre-defined tracks, the qudit density in the qudit processor is doubled. Transferring the plurality of qudits around the track reduces the crosstalk because non-interacting qudits are positioned with a separation greater than the quantum interaction distance. Furthermore, processing two pluralities of qudits successively and concurrently within the same qudit processor advantageously increases efficiency.

Optionally, receiving the second plurality of qudits at the first locations in the respective tracks comprises receiving the second plurality of qudits at the manipulation devices in the respective pre-defined tracks; manipulating the state of the second plurality of qudits at the manipulation device in their respective tracks; and transferring the second plurality of qudits from the manipulation device to the first location in their respective tracks.

Typically, the second plurality of qudits comprises the same number of qudits as the first plurality of qudits. In this example, each pre-defined track typically hosts two qudits, one qudit from the first plurality of qudits and another qudit from the second plurality of qudits.

Optionally, the second plurality of qudits may comprise a different number of qudits from the first plurality of qudits. In this example, some pre-defined tracks may host two qudits, one qudit from the first plurality of qudits and another qudit from the second plurality of qudits, and the other pre-defined tracks may host one qudit, from either the first plurality of qudits or the second plurality of qudits.

Each qudit of the second plurality of qudits follows the corresponding qudit of the first plurality of qudits in their respective tracks. Preferably, after transferring the first plurality of qudits from the second location to the third location in their respective tracks, the second plurality of qudits are transferred from the first location to the second location in their respective tracks.

Therefore, at a particular time, the first qudit of the first plurality of qudits may be at the third location in the first track whilst the first qudit of the second plurality of qudits is at the second location in the first track.

Typically, when the first qudit of the first plurality of qudits is at the third location in the first track, the fourth qudit of the first plurality of qudits is at the third location in the fourth track, and an interaction is enabled between the first and fourth qudits of the first plurality of qudits by positioning the third location in the first track and the third location in the fourth track within the quantum interaction distance.

Typically, when the first qudit of the second plurality of qudits is at the second location in the first track, the third qudit of the second plurality of qudits is at the second location in the third track, and an interaction is enabled between the first and third qudits of the second plurality of qudits by positioning the second location in the first track and the second location in the third track within the quantum interaction distance.

Optionally, the first qudit of the first plurality of qudits may be at the third location in the first track whilst the first qudit of the second plurality of qudits is at the first location in the first track.

Typically, when the first qudit of the first plurality of qudits is at the third location in the first track, the fourth qudit of the first plurality of qudits is at the third location in the fourth track, and an interaction is enabled between the first and fourth qudits of the first plurality of qudits by positioning the third location in the first track and the third location in the fourth track within the quantum interaction distance.

Typically, when the first qudit of the second plurality of qudits is at the first location in the first track, the second qudit of the second plurality of qudits is at the first location in the second track, and an interaction is enabled between the first and second qudits of the second plurality of qudits by positioning the first location in the first track and the first location in the second track within the quantum interaction distance.

In this way, interactions are enabled between a pair of qudits in the first plurality of qudits and a pair of qudits in the second plurality of qudits. These interactions may be enabled simultaneously or successively. Preferably, as the first and second pluralities of qudits are transferred around the plurality of pre-defined tracks, each qudit within the first and second pluralities of qudits interacts with other corresponding qudits in adjacent tracks, when adjacent tracks are brought within the quantum interaction distance.

Advantageously, this allows the density of qudits in the qudit processor to be increased whilst keeping non-interacting qudits sufficiently separated, thereby increasing the storage capacity of the processor without requiring additional space to process the qudits. This enables scalability of the qudit processor architecture. Advantageously, the first and second pluralities of qudits are processed successively and concurrently within the same qudit processor. Furthermore the first plurality of qudits and the second plurality of qudits can be processed independently of one another.

Optionally, the method may further comprise, after the step of transferring the second plurality of qudits from the first location to the second location in their respective tracks: receiving a third plurality of qudits at the first locations in the respective pre-defined tracks such that each track comprises three qudits; wherein each qudit of the third plurality of qudits follows the corresponding qudit of the second plurality of qudits in their respective tracks.

Typically, the method may comprise receiving a i-th plurality of qudits at the first locations in the respective pre-defined tracks such that each track comprises i qudits, wherein i>3. Typically, a first qudit of the i-th plurality of qudits follows a first qudit of the third plurality of qudits (optionally with intermediate pluralities of qudits); the first qudit of the third plurality of qudits follows the first qudit of the second plurality of qudits; and the first qudit of the second plurality of qudits follows the first qudit of the first plurality of qudits. Typically, a first qudit of the i-th plurality of qudits directly follows a first qudit of the (i-1)-th plurality of qudits.

Furthermore, the first qudit of the first plurality of qudits typically follows the first qudit of the i-th plurality of qudits as the first qudits in their respective pluralities of qudits proceed around the first track. The second, third, fourth or n-th qudits of the second, third, fourth or n-th tracks respectively, typically proceed in a similar manner in their respective tracks.

Advantageously, this allows the density of qudits in the qudit processor to be further increased whilst keeping non-interacting qudits sufficiently separated, thereby further increasing the storage capacity of the processor without requiring additional space to process the qudits. Advantageously, each of the pluralities of qudits are processed successively and concurrently within the same qudit processor. Furthermore each plurality of qudits can be processed independently of one another.

Optionally, each of the qudits within a track may be transferred simultaneously. Alternatively, one qudit in the track may be transferred separately from another qudit in the same track.

Optionally, each of the qudits within the first plurality of qudits may be transferred simultaneously, and each of the qudits within the second plurality of qudits may be transferred simultaneously. Optionally, the transfer of all the qudits in the first plurality of qudits may occur at the same time as, or at a different time from, the transfer of all the qudits in the second plurality of qudits. Alternatively, one or more qudits within the first and/or second plurality of qudits may be transferred separately from another qudit in the same plurality of qudits.

Typically, each qudit of the first plurality of qudits only interacts with other qudits within the first plurality of qudits, and each qudit of the second plurality of qudits only interacts with other qudits within the second plurality of qudits. That is, the first plurality of qudits is processed independently of the second plurality of qudits.

Typically, each plurality of qudits is processed independently of each of the other pluralities of qudits.

However, preferably the method may further comprise enabling interaction between the first qudit of the first plurality of qudits and the first qudit of the second plurality of qudits by positioning the first qudit of the first plurality of qudits and the first qudit of the second plurality of qudits within the quantum interaction distance along the first track.

Preferably the positioning of the first qudits from different pluralities of qudits is temporary, to enable interaction between them. The first qudits from different pluralities of qudits may be positioned within the quantum interaction distance for the time required to perform the required interaction.

Therefore following an interaction between the first qudit of the first plurality of qudits and the first qudit of the second plurality of qudits, the method typically further comprises separating the first qudits of the first and second pluralities of qudits such that the separation between the first qudits of the first and second pluralities of qudits is greater than the quantum interaction distance.

Optionally, the method may further comprise enabling interaction between any two neighbouring qudits within the same track. Generally, the n-th qudit of the i-th plurality of qudits and the n-th qudit of the i+1-th plurality of qudits may be positioned within the quantum interaction distance along the n-th track, thereby enabling interaction between the n-th qudit of the i-th plurality of qudits and the n-th qudit of the i+1-th plurality of qudits. The interaction may be enabled at a pre-defined location, such as the first, second, or third location within the n-th track. Typically, the interaction is enabled at an intermediate position between pre-defined locations. Optionally, said intermediate position is not within the quantum interaction distance of another track. Advantageously, this prevents crosstalk because the interacting qudits are separated from qudits in other tracks.

Advantageously, enabling interaction between qudits from different pluralities of qudits provides a quasi-3D architecture using a 2D architecture. Each of the tracks is arranged on a two dimensional (2D) surface, and each of the qudits can only be transferred within said surface. However, whilst typical qudit processors using a 2D architecture can be used to enable interactions between neighbouring qudits in an array of qudits, this method advantageously additionally enables interactions between corresponding qudits in different arrays. This therefore enables complex and efficient qudit processing using a simple architecture that is relatively easy to implement. Fewer classical control lines are required to implement the qudit processing method and thus the architecture can be readily scaled. The architecture advantageously allows for high qudit density in the qudit processor using shuttling to separate non-interacting qudits. The resulting quasi-3D architecture includes additional connectivity which advantageously enhances the computing potential of the device, for example by allowing the implementation of transversal controlled NOT (CNOT) gates in 2D topological codes for reducing the time of logical operations.

Optionally, interaction between qudits from different pluralities of qudits may be enabled in one or more tracks within the qudit processor, or for all tracks of the qudit processor.

Following the interaction between the first and fourth qudits at the third locations in their respective tracks, the plurality of qudits is transferred from the third location either to the first location or to the manipulation device, in their respective tracks. This applies to each of the pluralities of qudits being processed, whether there are one or more pluralities of qudits.

Optionally, transferring the plurality of qudits from the third location to the first location in their respective tracks may comprise: transferring the plurality of qudits from the third location to the manipulation device in their respective tracks; and transferring the plurality of qudits from the manipulation device to the first location in the first track.

Optionally, at the manipulation device, the state of each qudit will be manipulated, i.e. initialised, read out, or operated on (e.g. rotated). Alternatively, at the manipulation device, the qudit may be held without its state being manipulated.

Optionally, qudits may be transferred from the manipulation device to a reservoir, for example an electron reservoir. Optionally, qudits may be transferred from the reservoir to the first location. Optionally, one or more pre-defined tracks may have a corresponding reservoir.

Optionally, the state of each of the plurality of qudits may be manipulated at the manipulation device before the plurality of qudits are transferred from the manipulation device to the first location in the first track.

Advantageously, once each qudit in the plurality of qudits has been transferred around their respective tracks, interacting with other qudits at various locations, the state of each qudit can be manipulated. For example, the state of one or more qudits may be read out to infer the effect of the interactions on the state of the qudit. Alternatively, or in addition, the state of one or more qudits may be operated on using a single gate operation such as a rotation or a phase shift.

Optionally, the manipulation device may be configured to manipulate the state of the qudit multiple times. For example, the state of one or more qudit in the plurality of qudits may first be read out at the manipulation device, and subsequently the state of one or more qudits in the plurality of qudits may be initialised at the manipulation device before being transferred from the manipulation device to the first location in the first track.

Advantageously, the state of a qudit can be read out, initialised, and/or operated on in preparation for subsequent interactions. Initialising the state of the qudit typically comprises providing a zero reference point against which the effect of the interactions can be measured. Alternatively, initialising the state of the qudit may comprise setting a particular qudit state. Reading out the state of the qudit can be used to measure the effect of preceding interactions on that qudit or other qudits with which the measured qudit interacted. Operating on the state of the qudit can extend the depth of the quantum circuit.

Optionally, one or more qudits in the plurality of qudits may be transferred from the third location (i.e. the final location in the pre-defined track) directly to the first location without being transferred to the manipulation device. Advantageously this may allow a longer series of quantum interactions to occur within the array prior to further manipulation. Such a configuration is possible only with a looped track in which qudits can follow a circuitous path. Preferably the qudits follow a circuitous path from the manipulation device around to the manipulation device.

The steps of transferring qudits between locations typically depends on the type of qudit chosen. Typically, each of the transferring steps comprises shuttling. Shuttling is a process whereby qudits may be "shuttled" by modifying the local electric potential energy to transport charge. A charged particle such as an electron or an ion will settle into a local minimum in the electric potential energy landscape, and can be shuttled forwards by raising the electric potential energy in its current location and lowering the electric potential energy in the intended location, whilst maintaining high potential barriers elsewhere to guide the charged particle. This process is advantageous as it is reliable and tolerant to faults. Additionally, transferring using shuttling allows for global control of the movement of multiple qudit groups through the processor.

Preferably, when the transferring steps comprise shuttling, the qudits are electron spin qudits or trapped ion qudits. Advantageously, qudits of this type are readily transferred using shuttling. Typically, when the qudits are electron spin qudits, the shuttling is electron shuttling. Typically, when the qudits are trapped ion qudits, the shuttling is ion shuttling. Typically, the qudits are electron spin qudits in silicon.

Optionally, the qudits in one or more tracks are shuttled around their respective tracks whilst the qudits in other tracks are kept stationary. This advantageously enables additional interactions between qudits in the qudit processor.

Preferably, each of the tracks forms a substantially polygonal loop. The polygonal loop is defined such that a looped path can be provided from the first location to the second location to the third location, and back to the first location. Optionally, for tracks comprising intermediate locations between the first and second location and/or between the second and third location, the polygonal loop is defined such that a looped path can be provided from the first location to any intermediate locations between the first and second location to the second location to any intermediate locations between the second and third location, and back to the first location. Alternatively, the track may define a more complicated shape, such as a figure of eight in which the track crosses in the middle. Regardless of shape, the tracks preferably form circuitous loops.

As described herein, a qudit can be transferred from the third location to the manipulation device to the first location, or from the third location directly to the first location, bypassing the manipulation device. Alternatively, the qudit can be transferred from the third location to the manipulation device to the first location without being manipulated at the manipulation device. Each of the tracks is typically pre-defined within the qudit processor and comprises a series of locations at which qudits can be received and transferred to and from.

Advantageously, a looped track enables a qudit to be transferred around the loop more than once, in a cyclic manner. Therefore although the qudit can only undergo a limited number of interactions each time the qudit traverses the track, it is possible for the qudit to be transferred around the track more than once due to the looped nature of the track, and consequently a qudit processing method of any number of interactions can be performed.

Preferably, the loop forms a closed path. Advantageously this allows direct transfer from the third location in the track to the first location in the track. Typically, a qudit traversing the loop can be transferred out of the loop, for example to a manipulation device, and can subsequently be transferred back into the loop from the manipulation device after one or more steps of manipulating the state of the qudit.

Optionally, one or more locations on each track may be at a corner or vertex of the polygonal loop. Optionally, each of the locations on each track may be at a corner of the polygonal loop. For example, the track may be substantially triangular, i.e. form a polygonal loop having three corners or vertices connected by three edges. The first location of the track may be positioned at the first corner; the second location of the track may be positioned at the second corner; and the third location of the track may be positioned at the third corner. A location positioned at a corner is typically positioned substantially at the corner of the polygonal loop. Typically, a location positioned at a corner is positioned at a curved or angled portion of the loop, or in the vicinity of said portion.

Advantageously, when a location is located at a corner, interactions involving the corner location between qudits in neighbouring tracks are well-defined. An interaction at a corner beneficially has a high fidelity because the qudits are stationary during the interaction.

Alternatively or in addition, one or more locations on each track may be along an edge of the polygonal loop. Optionally, each of the locations on each track may be along an edge of the polygonal loop. For example, the track may be substantially triangular. The first location of the track may be positioned along a first edge; the second location of the track may be positioned along the second edge; and the third location of the track may be positioned along the third edge. A location positioned along an edge may be positioned within an area smaller than the length of the edge. Alternatively, a location positioned along an edge may be positioned along a spread region along the edge, occupying up to substantially the entire edge.

Advantageously, when a location is located along an edge, interactions involving the edge location between qudits in neighbouring tracks can occur over an extended period.

Positioning one or more locations along the edge advantageously reduces the effective processing time for the interactions around the loop. This is particularly beneficial when the rate-limiting step is one or more of the interactions. The effective processing time of the interactions is preferably reduced by extending the gate operation over a portion of an edge of the loop and carrying out the interaction in parallel with the transferring of the qudits along the track. The effective processing time may be further reduced by extending the gate operation over the whole of an edge of the loop and carrying out the interaction in parallel with the qudit transfer.

Another aspect of the invention provides a qudit processor for performing the method according to the first aspect. The qudit processor comprises a plurality of pre-defined separate tracks, each track configured to receive one or more qudits. Each track is configured to transfer the one or more qudits of that track along the track. At least a portion of each track is arranged to be within a quantum interaction distance from one or more other tracks so as to enable interactions between qudits in different tracks.

Advantageously, this qudit processor provides a platform for processing one or more arrays of qudits simultaneously. An interaction between qudits in neighbouring tracks (i.e. an inter-track interaction) is enabled by positioning one location in one track within a quantum interaction distance from another location in another track. When two qudits are positioned in the one location and the another location respectively, an interaction is enabled between the two qudits because they are close enough to interact.

A further aspect of the invention, which is not covered by the claims, provides a qudit processor comprising a first pre-defined track, the track forming a loop. The qudit processor also comprises second to k-th pre-defined tracks, wherein k > 3, each of the second to k-th tracks forming a loop. Each track (i.e. each of the first and second to k-th tracks) is configured to receive one or more qudits and to transfer the one or more qudits of that track along the track. Each of the second to k-th pre-defined tracks is separate from the first pre-defined track. At least a portion of each of the second to k-th tracks is arranged to be within a quantum interaction distance from the first track so as to enable interactions between qudits in the first track and the second to k-th tracks.

Advantageously, this qudit processor enables the simultaneous processing of one or more pluralities of qudits. Interactions are enabled between qudits in the first track and qudits in the second to k-th tracks. An inter-track interaction is enabled by positioning a portion of each of the second to k-th tracks within the quantum interaction distance from a portion of the first track. When two qudits are positioned in the portions of the tracks that are within the quantum interaction distance, an interaction is enabled between the two qudits because they are close enough to interact.

The qudit processor is typically implemented in a silicon device and the tracks are preferably gate-defined using a plurality of electrodes. Typically the tracks are formed as a result of the electric field produced by a pattern of electrodes. This is referred to as electrostatic confinement. Optionally the qudits may be confined to a first two-dimensional plane within the qudit processor and the electrodes may be provided in a second two-dimensional plane distinct from the first two-dimensional plane. Preferably, the vertical separation between the first and second two-dimensional planes is small enough that the application of a bias potential to an electrode in the second two-dimensional plane can be used to manipulate the state of a qudit in the first two-dimensional plane.

Typically, each track is defined by applying an electrical potential to the corresponding electrodes. The magnitude of the electrical potential can be modified to strengthen the confinement of the qudits within the track.

Alternatively, the tracks may be defined by structural variations in the first two-dimensional plane containing the qudits.

The transfer of the one or more qudits typically involves shuttling. The shuttling is preferably effected by modifying one or more electrical potentials applied to the electrodes. Typically, switching the electrical potentials moves the qudits along the track. Advantageously this can be performed globally such that multiple qudits within the qudit processor can be shuttled simultaneously.

In the qudit processor, k > 3. Therefore the qudit processor comprises at least a first pre-defined track, a second pre-defined track, a third pre-defined track and a fourth pre-defined track. The qudit processor optionally comprises more pre-defined tracks. Typically, there are at least fifty tracks, and optionally there may be up to several thousands of tracks in the qudit processor, although there is no upper limit to the number of tracks.

Typically the loop is closed. In other words, an endless loop can be provided in which qudits can be cycled indefinitely. Preferably, the loop is substantially polygonal. The looped geometry of the track enables qudits within the processor to cycle around the tracks multiple times, thereby advantageously removing a limit on the number of processing steps that can be performed in a single quantum circuit. The loop preferably extends from a manipulation device back to the same manipulation device.

The qudit processor may comprise additional manipulation devices not directly connected to any of the pre-defined tracks. In order to manipulate the state of a qudit using one of these manipulation devices, the qudit may be transferred away from the track to the manipulation device. Following manipulation, the qudit may be transferred to a reservoir and a different qudits may be transferred around the track, or the qudit may be transferred back to the same track or a different track.

Interactions between qudits in the same track (i.e. intra-track interactions) can be enabled by positioning two qudits in the track within the quantum interaction distance. The combination of inter-track interactions and intra-track interactions advantageously provides a quasi-3D architecture using a 2D qudit processor architecture. This therefore enables complex and efficient qudit processing using a simple architecture that is relatively easy to implement. The use of inter- and intra-track interactions provides additional connectivity, beneficially enhancing the computing potential of the qudit processor. Qudit processing methods which typically require 3D qudit arrays, which are typically complex and costly to produce, can instead advantageously be performed using the qudit processing method and qudit processor of the invention.

Typically, each of the first and second to k-th tracks comprises one or more locations. For example, each track may comprise a first location, a second location and a third location. The qudits within the track can be received at each of the locations and are typically transferred from the first to the second to the third location, back to the first location.

Typically, each track (i.e. the first and second to k-th tracks) further comprises a manipulation device configured to initialise and/or readout and/or operate on the state of a qudit on that track. As examples, a manipulation device in a track may have an initialisation function; a manipulation device in a track may have a readout function; a manipulation device in a track may have a gate operation function. Further, a manipulation device may have two of these functions such as initialisation and readout; readout and gate operation; or initialisation and gate operation. Still further, a manipulation device may have all three of the above functions, namely initialisation, readout and gate operation. A manipulation device having an initialisation function may be referred to as an initialisation device. A manipulation device having a readout function may be referred to as a readout device. A manipulation device having a gate operation function may be referred to as a gate device.

A manipulation device having an initialisation function is typically used to initialise the state of one or more qudits on that track. For example, a qudit may be received at the initialisation device, optionally from the third location of the track, then the state of the qudit may be initialised, then the qudit may be transferred to the first location of the track.

A manipulation device having a readout function is typically used to read out the state of one or more qudits on that track. For example, a qudit may be transferred from the third location of the track to the manipulation device, then the state of the qudit may be read out, then the qudit may be transferred to the first location of the track. Optionally the state of the qudit may be further manipulated using the manipulation device, and then transferred from the initialisation device to the first location of the track.

A manipulation device having a gate operation function is typically used to perform a gate operation on the state of one or more qudits on that track. The gate operation may for example be a rotation or a phase shift. For example, the rotation may be an X-, Y-, Z- rotation or a Hadamard operation.

Optionally, the manipulation device of one or more tracks comprises a plurality of manipulation elements, wherein each manipulation element is configured to manipulate the state of a qudit on that track. For a manipulation device having a plurality of manipulation elements, the function of each manipulation element may be the same or optionally one or more manipulation elements may have a different function.

Advantageously, the inclusion of a plurality of manipulation elements allows the manipulation to be performed on a plurality of qudits in parallel. Therefore, if the rate-limiting step is the manipulating step such as the read out or the initialisation of the state of the qudit or the performance of a gate operation on the state of the qudit, the throughput can be increased, i.e. the separation between qudits within the track can be reduced, allowing more qudits to occupy the track at any one time.

Typically, addition of a plurality of manipulation elements would not affect the processing time in the qudit processing method. However, due to the architecture described herein, the inclusion of a plurality of manipulation elements can advantageously be used to reduce the effective processing time, and thus the overall processing time of a plurality of qudits in the processor.

The rate-limiting step typically depends on the quantum circuit implemented on the qudit processor. The rate-limiting step may be initialisation, readout, a gate operations and/or interaction, or transfer. Typically, the rate-limiting step is not the transfer of the qudits because this is relatively fast in comparison with the other processes.

A further aspect of the invention, which is not covered by the claims, provides a method for performing quantum computations in a qudit processor. The method comprises the steps of: manipulating the state of a first qudit at a manipulation device in a pre-defined track; transferring the first qudit from the manipulation device to a first location in the track; and transferring the first qudit from the first location in the track to a second location in the track. The method further comprises: manipulating the state of a second qudit at the manipulation device in the track; transferring the second qudit from the manipulation device to the first location in the track; transferring the first qudit from the second location in the track to a third location in the track; and transferring the second qudit from the first location in the track to the second location in the track. The method further comprises: either transferring the first qudit from the third location in the track to the first location in the track; or transferring the first qudit from the third location in the track to the manipulation device in the track; and manipulating the state of the first qudit at the manipulation device. The method further comprises: transferring the second qudit from the second location in the track to the third location in the track. One or more qudit operations and/or interactions are enabled for the first and second qudits on the track.

Advantageously, this method enables a plurality of qudits to be processed successively and concurrently, and optionally independently. The first qudit and the second qudit follow the same path through the qudit processor, and in this way the qudits occupy less space than two qudits processed in separate positions within the processor.

The second qudit follows the first qudit around the pre-defined track from one location to the next. Preferably, once the first qudit has been transferred away from the n-th location in the track, the second qudit can be transferred to the n-th location.

The state of the first and second qudits is manipulated at a manipulation device. The manipulating may comprise one or more of initialising, reading out and operating on. Optionally, the manipulation device comprises a group of manipulation elements. For example, the first qudit may be manipulated at a first manipulation element, and the second qudit may be manipulated at a second manipulation element. Alternatively, the first and second qudits may be manipulated at the same manipulation element.

The first and second qudits each proceed from the manipulation device to the first location to the second location to the third location and back to the first location. Optionally, the first and/or second qudit may be transferred from the third location to the manipulation device at which the state of said qudit may be manipulated. Typically, the state of the first and/or second qudit may be manipulated multiple times before being transferred from the manipulation device to the first location. Alternatively, the state of the first and/or second qudit may be transferred directly from the manipulation device to the first location following one manipulating step. Alternatively, the state of the first and/or second qudit may not be manipulated whilst at the manipulation device. As a further alternative, the first and/or second qudit may be transferred directly from the third location to the first location.

The track optionally includes one or more intermediate locations between the first and second locations and one or more intermediate locations between the second and third locations.

One or more qudit operations and/or interactions are enabled for the first and second qudits on the track. Typically an operation and/or interaction is enabled at at least one of the first, second and third locations, although an operation and/or interaction may be enabled at one or more intermediate locations in addition to or instead of the first, second and third locations. Typically, the operations are single-qudit operations. Typically, the interactions are two-qudit operations that occur between the first qudit and another qudit in another track, or between the second qudit and another qudit in another track.

Advantageously, this method provides periodic interactions for a plurality of qudits. The first and/or second qudits can be transferred around the loop indefinitely, thereby advantageously allowing a quantum circuit of any depth to be implemented using this method.

More than two qudits can be processed in the track at the same time, each qudit spatially separated from its neighbouring qudits and following the same route at the previous qudit. Optionally j qudits may be processed in the track according to this method. Typically, the j-th qudit can be transferred to the m-th location in the track once the j-1-th qudit has been transferred away from the m-th location in the track.

Preferably, the pre-defined track is a first pre-defined track and the method further comprises: manipulating the state of another first qudit at a manipulation device in a second pre-defined track, wherein the second pre-defined track is separate from the first pre-defined track; transferring the another first qudit from the manipulation device in the second track to a first location in the second track; and transferring the another first qudit from the first location in the second track to a second location in the second track. The method preferably further comprises: manipulating the state of another second qudit at the manipulation device in the second track; transferring the another second qudit from the manipulation device in the second track to the first location in the second track; transferring the another first qudit from the second location in the second track to a third location in the second track; and transferring the another second qudit from the first location in the second track to the second location in the second track. The method preferably further comprises: either transferring the another first qudit from the third location in the second track to the first location in the second track; or transferring the another first qudit from the third location in the second track to the manipulation device in the second track; and manipulating the state of the another first qudit at the manipulation device in the second track. The method preferably further comprises: transferring the another second qudit from the second location in the second track to the third location in the second track. Preferably, one or more qudit operations and/or interactions are enabled for the another first and another second qudits on the second track.

Advantageously, this method allows a further plurality of qudits to be processed successively and concurrently, and optionally independently. Optionally the first and another first qudit form part of a first array of qudits, and the second and another second qudit form part of a second array of qudits. Preferably the first and second arrays of qudits can be processed in the same qudit processor at the same time.

The first array of qudits and the second array of qudits may each comprise more than two qudits. Advantageously, using this method, a plurality of qudits can be processed in a reduced space, i.e. the qudit density can be increased, whilst reducing cross-talk between non-interacting qudits.

Preferably, the first location in the first track and the first location in the second track are within a quantum interaction distance and the method further comprises: enabling an interaction between the first qudit and the another first qudit when the first qudit is at the first location in the first track and the another first qudit is at the first location in the second track; and enabling an interaction between the second qudit and the another second qudit when the second qudit is at the first location in the first track and the another second qudit is at the first location in the second track.

Advantageously, this method enables interactions between a qudit in the first track and a qudit in the second track. This advantageously increases the options for circuit design and enables two-qudit interactions between qudits in different tracks. Using this method, two-qudit interactions are enabled between pairs of qudits in the same array.

Optionally, the first qudit and the second qudit may be positioned within the quantum interaction distance along the first track. The first qudit is in the first array and the second qudit is in the second array, therefore this method advantageously enables interaction between a qudit in the first array and a qudit in the second array. This method advantageously provides a quasi-3D architecture using a 2D qudit processor architecture. This therefore enables complex and efficient qudit processing using a simple architecture that is relatively easy to implement.

A qudit processor is provided in another aspect of the invention, which is not covered by the claims, comprising a manipulation device, and a pre-defined track forming a loop from the manipulation device to the manipulation device. There are at least first, second and third gate devices that are configured to perform quantum operations provided along the track at respective first, second and third locations. The track is configured to receive a plurality of qudits; transfer the plurality of qudits successively around the track in the loop from the manipulation device towards the first location, the second location and the third location in a first direction; and enable one or more qudit operations at the first, second and third gate devices and/or to enable one or more quantum interactions for one or more qudits of the plurality of qudits. Advantageously, this processor enables a plurality of qudits to be processed successively and concurrently within the pre-defined track. Providing a processor having this benefit further enables a higher qudit density in the processor because the same number of qudits occupy less space.

The first direction is from the first location to the second location, and from the second location to the third location, and from the third location to the first location. The track is preferably an endless loop from the manipulation device back towards the same manipulation device. In this way, qudits can be cycled around the loop indefinitely, moving successively between the first, second and third locations, and from the third location back to the first location.

Preferably, interactions between two qudits are enabled by positioning two qudits within a quantum interaction distance.

Another aspect of the invention, which is not covered by the claims, provides a method for performing quantum computations in a qudit processor. The method comprises receiving a plurality of qudits at manipulation devices in respective pre-defined tracks. Receiving a plurality of qudits at manipulation devices in respective pre-defined tracks comprises: receiving a first qudit at a manipulation device in a first pre-defined track; receiving a second qudit at a manipulation device in a second pre-defined track, wherein at least a portion of the second track is within a quantum interaction distance from the first track; receiving a third qudit at a manipulation device in a third pre-defined track, wherein at least a portion of the third track is within the quantum interaction distance from the first track; and receiving a fourth qudit at a manipulation device in a fourth pre-defined track, wherein at least a portion of the fourth track is within the quantum interaction distance from the first track. The method further comprises: manipulating the state of the plurality of qudits at the manipulation device in their respective tracks; transferring the plurality of qudits from the manipulation device to a first location in their respective tracks; enabling interaction between the first qudit and the second qudit when the first qudit is at the first location in the first track and the second qudit is at the first location in the second track by positioning the first location in the first track and the first location in the second track within the quantum interaction distance; transferring the plurality of qudits from the first location to a second location in their respective tracks; enabling interaction between the first qudit and the third qudit when the first qudit is at the second location in the first track and the third qudit is at the second location in the third track by positioning the second location in the first track and the second location in the third track within the quantum interaction distance; transferring the plurality of qudits from the second location to a third location in their respective tracks; and enabling interaction between the first qudit and the fourth qudit when the first qudit is at the third location in the first track and the fourth qudit is at the third location in the fourth track by positioning the third location in the first track and the third location in the fourth track within the quantum interaction distance. The method further comprises either: transferring the plurality of qudits from the third location to the first location in their respective tracks; and enabling interaction between the first qudit and the second qudit when the first qudit is at the first location in the first track and the second qudit is at the first location in the second track; or: transferring the plurality of qudits from the third location to the manipulation device in their respective tracks; and manipulating the state of the plurality of qudits at the manipulation device in their respective tracks.

A further aspect of the invention provides a qudit processor for performing the method according to the first aspect. The qudit processor comprises a plurality of pre-defined tracks, each track configured to receive one or more qudits. Each track is configured to transfer the one or more qudits of that track along the track. At least a portion of each track is arranged to be within a quantum interaction distance from one or more other tracks so as to enable interactions between qudits in different tracks.

An aspect of the invention, which is not covered by the claims, provides a qudit processor comprising a first pre-defined track, the track forming a loop. The qudit processor also comprises second to k-th pre-defined tracks, wherein k > 3, each of the second to k-th tracks forming a loop. Each track (i.e. each of the first and second to k-th tracks) is configured to receive one or more qudits and to transfer the one or more qudits of that track along the track. At least a portion of each of the second to k-th tracks is arranged to be within a quantum interaction distance from the first track so as to enable interactions between qudits in the first track and the second to k-th tracks.

In many examples the qudits may be qubits, corresponding to a two-state quantum system. However, a person skilled in the art would understand that a higher number of quantum states may be employed in other applications.

Evidently, method features may be provided as apparatus features and *vice-versa.* In addition, the preferred features of one aspect of the invention could be provided together with any other feature of the invention.

### BRIEF DESCRIPTION OF THE DRAWINGS

Embodiments of the invention will now be described with reference to the accompanying drawings in which:
Figure 1 is a schematic plan view of a qubit processor;
Figure 2 is a schematic plan view of a qubit processor;
Figure 3A is a schematic logical illustration of a qubit processor;
Figure 3B is a schematic plan view of the qubit processor that is logically depicted in Figure 3A;
Figure 4A is a schematic logical illustration of a qubit processor;
Figure 4B is a schematic plan view of the qubit processor that is logically depicted in Figure 4A;
Figure 5A is a schematic logical illustration of a qubit processor;
Figure 5B is a schematic plan view of the qubit processor that is logically depicted in Figure 5A;
Figure 6 is a schematic plan view of a qubit processor;
Figure 7A is a schematic logical illustration of a qubit processor;
Figure 7B is a schematic plan view of the qubit processor that is logically depicted in Figure 7A;
Figure 8A is a schematic logical illustration of a qubit processor;
Figure 8B is a schematic plan view of the qubit processor that is logically depicted in Figure 8A;
Figure 9A is a schematic illustration of a qubit processor;
Figure 9B is a schematic illustration of the qubit processor of Figure 9A;
Figure 10 is a flow chart of a qubit processing method; and
Figure 11 is a flow chart of a qubit processing method.

### DETAILED DESCRIPTION

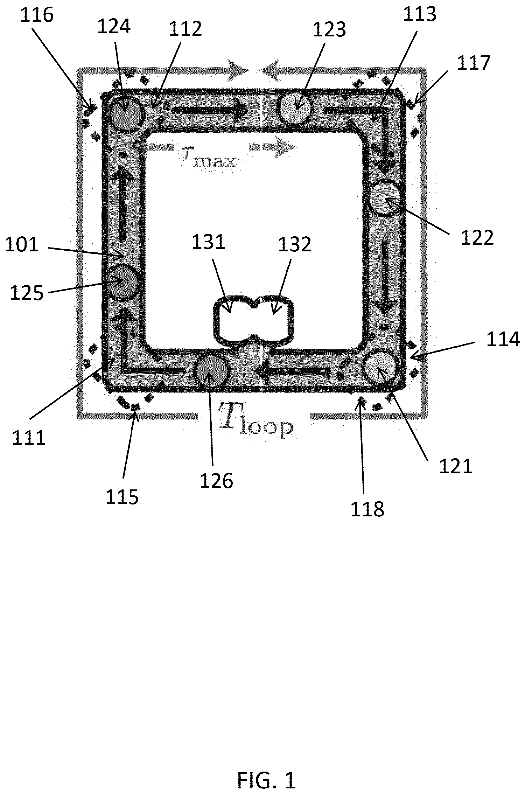

Figure 1 schematically illustrates a plan view of a qubit processor at a point in time, t. The qubit processor comprises a pre-defined track 101. In this example, the track 101 is a substantially square loop. In this example, the manipulation device 131, 132 has an initialisation function and a readout function. The manipulation device having the initialisation function is referred to as an initialisation device 131; the manipulation device having the readout function is referred to as a readout device 132. The initialisation device 131 and readout device 132 form part of the manipulation device 131, 132 which is connected to the track 101. In an alternative example, there may be only an initialisation device or only a readout device. In a further example, the manipulation device may comprise a gate device in addition to or instead of the initialisation and/or readout devices.

There are four notional locations 111, 112, 113, 114 in the track 101: a first location 111 at a first corner of the track 101; a second location 112 at a second corner of the track 101; a third location 113 at a third corner of the track 101; and a fourth location 114 at a fourth corner of the track 101. The fourth location in this example is the final location in the track. Any conceivable labelling convention could be used for the locations, which would depend on the number of locations that are present and on the shape of the relevant track. At each location, there is a gate device 115, 116, 117, 118. A qubit operation and/or interaction can be enabled at one or more of the gate devices 115-118.

In Figure 1, there are six qubits 121, 122, 123, 124, 125, 126. At time t, the qubits 121-126 are approximately evenly spaced around the track 101. During at least part of the operation, the qubits are in motion, and are transferred around the loop in a clockwise direction as indicated by the arrows in the track 101. At time t, the first qubit 121 is at the final location, i.e. the fourth location 114 in this clockwise path that starts at the initialisation device 131. The first qubit 121 is undergoing a quantum operation at the fourth location 114. The particular quantum operation performed on the first qubit 121 is determined by the gate device 118 that is present at the fourth location 114. Each of the gate devices 115-118 in this example enables a single qubit operation such as an X-, Y- or Z-rotation, a Hadamard gate, a phase shift, or any other known quantum operation. In another example, a gate device may enable a two-qubit interaction.

Figure 1 illustrates a single track 101. However, typically there are multiple tracks arranged in an array across the qubit processor, with a portion of each track coming within the quantum interaction distance from at least one neighbouring track to enables interactions between qubits in different tracks.

At time t, the second qubit 122 is between the third location 113 and the fourth location 114. Before time t, the second qubit 122 was at the third location 113 and underwent a quantum operation according to the gate device 117 at the third location 113. Following the operation at the third location 113, the second qubit 122 would be transferred from the third location 113 in the track 101 to the fourth location 114 in the track 101. In this example, the transfer from the third location 113 to the fourth location 114 involves transferring the second qubit 122 from the third location 113 to an intermediate location between the third location 113 and fourth location 114, and then transferring the second qubit 122 from the intermediate location between the third and fourth locations 113, 114 to the fourth location 114. At time t, the second qubit 122 is in the intermediate location, situated between the third location 113 and the fourth location 114.

At time t, the third qubit 123 is at an intermediate location between the second location 112 and the third location 113. Before time t, the third qubit 123 was at the second location 112, and after time t, the third qubit 123 will be transferred to the third location 113. In this example, the transfer from the second location 112 to the third location 113 involves transferring the third qubit 123 from the second location 112 to an intermediate location between the second location 112 and third location 113, and then transferring the third qubit 123 from the intermediate location between the second and third locations 112, 113 to the third location 113. At time t, the third qubit 123 is in the intermediate location between the second location 112 and the third location 113.

At time t, the fourth qubit 124 is at the second location 112. The fourth qubit 124 is undergoing a quantum operation at the second location 112. The particular quantum operation performed on the fourth qubit 124 at time t is determined by the gate device 116 at the second location 112. The gate device 116 at the second location 112 may be the same as or different from the gate device 118 at the fourth location 114.

At time t, the fifth qubit 125 is at an intermediate location between the first location 111 and the second location 112. Before time t, the fifth qubit 125 was at the first location 111, and after time t, the fifth qubit 125 will be transferred to the second location 112. In this example, the transfer from the first location 111 to the second location 112 involves transferring the fifth qubit 125 from the first location 111 to an intermediate location between the first and second locations 111, 112, and then transferring the fifth qubit 125 from the intermediate location between the first and second locations 111, 112 to the second location 112 in the track 101. At time t, the fifth qubit 125 is in the intermediate location between the first and second locations 111, 112.

At time t, the sixth qubit 126 is located between the initialisation device 131 and the first location 111. In this example, before time t, the sixth qubit 126 was at the initialisation device 131. Whilst the sixth qubit 126 was at the initialisation device 131, the state of the sixth qubit 126 was initialised. After initialisation, the sixth qubit 126 was transferred from the initialisation device 131 towards the first location 111 in the track 101. In this example, the transfer of the sixth qubit 126 from the initialisation device 131 to the first location 111 involves transferring the sixth qubit 126 from the initialisation device 131 to an intermediate location between the initialisation device 131 and the first location 111, and then transferring the sixth qubit 126 from the from said intermediate location to the first location 111. At time t, the sixth qubit 126 is at the intermediate location between the initialisation device 131 and the first location 111.

In another example, before time t, the sixth qubit 126 was transferred from the fourth location 114 towards the first location 111 without being transferred to the initialisation device 131 or the readout device 132.

In this example, the sixth qubit 126 follows the fifth qubit 125, the fifth qubit 125 follows the fourth qubit 124, the fourth qubit 124 follows the third qubit 123, the third qubit 123 follows the second qubit 122, the second qubit 122 follows the first qubit 121 and the first qubit 121 follows the sixth qubit 126. In another example, there may be n qubits, where n > 6, and the first qubit 121 follows the n-th qubit. In this example, each qubit follows the preceding qubit around the track 101 in a clockwise direction, indicated by the arrows in the track 101, and each qubit is separated by a distance greater than the quantum interaction distance. In another example, the qubits may proceed around the track 101 in an anti-clockwise direction.

In a further example, two neighbouring qubits (i.e. the first and second qubits 111, 112, the second and third qubits, 112, 113, the third and fourth qubits 113, 114, the fourth and fifth qubits 114, 115, the fifth and sixth qubits 115, 116, or the sixth and first qubits 116, 111) can be positioned within the quantum interaction distance in order to enable a two-qubit interaction between that pair of qubits. The positioning may occur by leaving the leading qubit stationary and transferring the trailing qubit towards the leading qubit. Alternatively the positioning may occur by leaving the trailing qubit stationary and transferring the leading qubit in a reverse direction along the track back towards the trailing qubit. As a further alternative the positioning may occur by transferring both the leading and trailing qubits towards each other (i.e. with the trailing qubit being transferred in the normal direction of transfer along the track 101 and with the leading qubit being transferred in the opposition direction). The positioning of neighbouring qubits within the quantum interactions is temporary, to allow enough time for the qubits to interact. Following the interaction, the qubits are separated by transferring the leading qubit forwards along the track 101 so that they are separated by a distance that is greater than the quantum interaction distance.

Figure 1 illustrates the qubit processor at time t. The number of qubits on the track may vary over time. For example, one or more qubits may be transferred from the fourth location 114 to the readout device 132, and the state of the one or more qubits may be read out. Alternatively one or more initialised qubits may be transferred from the initialisation device 131 to the first location 111. After readout, a qubit may be transferred from the readout device 132 to the initialisation device 131.

At time t, as shown in Figure 1, the first location 111 and third location 113 are empty and the second location 112 and fourth location 114 are occupied. In this example, each location 111-114 corresponds to a particular quantum operation and therefore each qubit 121-126, when located at the first location 111, will undergo a first quantum operation. Each qubit 121-126, when located at the second location 112, will undergo a second quantum operation. Each qubit 121-126, when located at the third location 113, will undergo a third quantum operation. Each qubit 121-126, when located at the fourth location 114, will undergo a fourth quantum operation. In examples having more than four locations, this may be true for each location on the track. In this way, all the qubits 121-126 in the track can be processed in parallel.

Alternatively, one or more locations may be reconfigured during a qubit processing method in order to perform a different quantum operation. This may be employed to perform a quantum circuit of any depth on a track of finite size.

The time taken for each qubit to proceed around the loop once is Tₗₒₒₚ. This may also be referred to as the cycling period and is the sum of each of the processing steps performed around the loop. The processing steps include: transferring a qubit from one location to the next location around the loop; performing a quantum operation and/or interaction involving one or two qubits; initialising the state of a qubit, if performed; and reading out the state of a qubit, if performed. The time taken to perform each of m processing steps in the track is τₘ, and Tₗₒₒₚ is equal to the sum of τₘ for all m in the track. τₘ typically varies for each processing step and for different quantum circuits.

The number of qubits that can be processed in the track 101 is dependent on Tₗₒₒₚ and the time taken to perform the longest processing step, i.e. the rate-limiting step time τₘₐₓ. However, as described below, the time taken to perform the rate-limiting step τₘₐₓ, can be reduced. In this example, the qubits are processed in a steady-state, i.e. are continuously undergoing a processing step as defined above. Therefore the number of qubits that can be processed simultaneously in the track 101, Kₗₒₒₚ = Tₗₒₒₚ/τₘₐₓ. This avoids any collisions between neighbouring qubits.

In other examples, the number of qubits that can be processed at any one time in the track is increased by including buffering steps in between processing steps. A buffering step involves leaving a qubit stationary on the track for a period of time. A buffering step can be employed when a preceding qubit is undergoing a lengthy processing step. This reduces the impact of a long rate-limiting step, i.e. a large τₘₐₓ. Buffering steps are not employed in the steady-state process.

Tₗₒₒₚ may vary each time the qubit travels around the track. This may be due to some processing steps being omitted, or modified, each time the qubit or plurality of qubits travels around the track. Optionally, if a processing step is omitted, a buffering step may be included to ensure the qubits within the track do not collide.

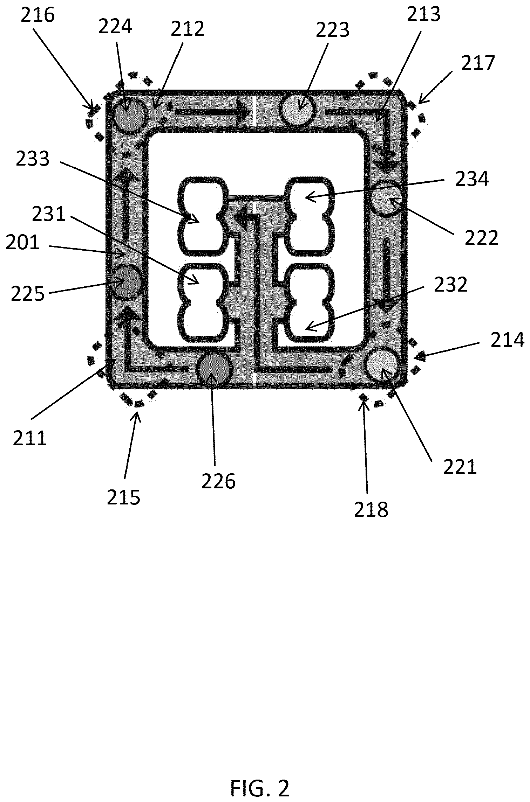

Figure 2 schematically illustrates a qubit processor at a point in time, t. The qubit processor illustrated in Figure 2 shares similar features with the qubit processor shown in Figure 1; similar reference numerals are used to refer to similar features.

The qubit processor in Figure 2 comprises a substantially square pre-defined track 201 with four locations 211, 212, 213, 214 situated at the four corners of the track 201 with six qubits 221, 222, 223, 224, 225, 226 proceeding clockwise, in order, around the track 201. There are four gate devices 215, 216, 217, 218, one positioned at each location 211-214 in the track 201. For the sake of simplicity, the qubits 221-226 are shown at the same positions in the track 201 as in Figure 1. However, it is understood that the qubits 221-226 progress around the track 201 in a clockwise manner as indicated by the arrows.

In Figure 2, the qubit processor includes a plurality of manipulation elements 231, 232, 233, 234. In this example, the qubit processor includes a first initialisation element 231, a second initialisation element 232, a first readout element 233 and a second readout element 234. In another example, each element 231-234 may have the same function (i.e. either readout, initialisation or operation), or the first element 231 has a first function and the remaining elements 232-234 has a second function, or the first element 231 has a first function, the second element 232 has a second function, and the third and fourth elements 233, 234 have a third function. In a further example, one or more elements 231-234 have more than one function. Any combination of manipulation elements is possible.

Similarly to Figure 1, Figure 2 illustrates a single track 201. However, typically there are multiple tracks arranged in an array across the qubit processor, with a portion of each track coming within the quantum interaction distance from at least one neighbouring track to enable interactions between qubits in different tracks. One or more of the tracks may include a plurality of manipulation elements, and tracks may comprise different pluralities of manipulation elements and/or different manipulation elements having different functions.

The plurality of manipulation elements 231-234 reduces the effective processing time required for manipulation respectively. This reduces the overall processing time without using null processing steps such as buffering described above. Each manipulation element can manipulate the state of one qubit at any one time. Therefore, if there is a plurality of initialisation elements, as shown, the state of each of a plurality of qubits can be initialised in parallel. Similarly, if there is a plurality of readout elements, as shown, the state of each of a plurality of qubits can be read out in parallel. Further, if there is a plurality of gate operation elements, the state of each of a plurality of qubits can be operated on in parallel. Where there is a plurality of gate operation elements, the quantum operations performed at each gate operation element are not required to be the same.

Generally, for m times more manipulation elements, the effective manipulation time will be reduced by a factor of m as long as there are more than m qubits in the track.

The time taken to initialise, readout and/or operate on the state of a qubit may be longer than the time taken to perform any of the other processing steps. This means that the manipulation step may be the rate-limiting step, i.e. the time taken to perform either the initialisation or the readout or the operating processing steps is τₘₐₓ. Therefore, including m manipulation elements to reduce the effective manipulation time, where m is a plurality, reduces the rate-limiting step time τₘₐₓ to τₘₐₓ/m and increases the number of qubits that can be processed simultaneously in the track 101, Kₗₒₒₚ.

When the initialisation or readout or gate operation is the rate-limiting step, it is possible, by using a plurality of initialisation, readout and/or gate operation elements, to reduce the effective processing time such that the particular manipulating step is no longer the rate-limiting step.

In Figure 2, the first qubit 221 is at the fourth location 214 in the track 201. In this example, after time t, the first qubit 221 is transferred to the first readout element 233. After the transfer of the first qubit 221 to the first readout element 233, the second qubit 222 is transferred to the second readout element 234. The second qubit 222 is received at the second readout element 234 whilst the state of the first qubit 221 is being read out at the first readout element 233. Therefore the state of the first and second qubits 221, 222 are read out in parallel.

In this example, after the state of the first qubit 221 has been read out at the first readout element 233, the first qubit 221 is transferred to the first initialisation element 231. When the first qubit 221 is no longer at the first readout element 233, the third qubit 223 is received at the first readout element 233 and the state of the third qubit 223 is read out. At the first initialisation element 231, the state of the first qubit 221 is initialised whilst the state of the second and/or third qubits 222, 223 is being read out at the first and second readout elements 233, 234.

Once the state of the first qubit 221 has been initialised, the first qubit 221 is transferred to the first location 211 in the track 201.

In another example, one or more of the first, second and third qubits 221-223 is transferred directly from the fourth location 214 to the first location 211 without being transferred to a readout element 233, 234 or an initialisation element 231, 232.

The following qubits in the track follow the path of the qubits described above. Each qubit 221-226 is transferred from the fourth location 214 in the track 201 either to an manipulation element 231-234 or to the first location 211 in the track 201.

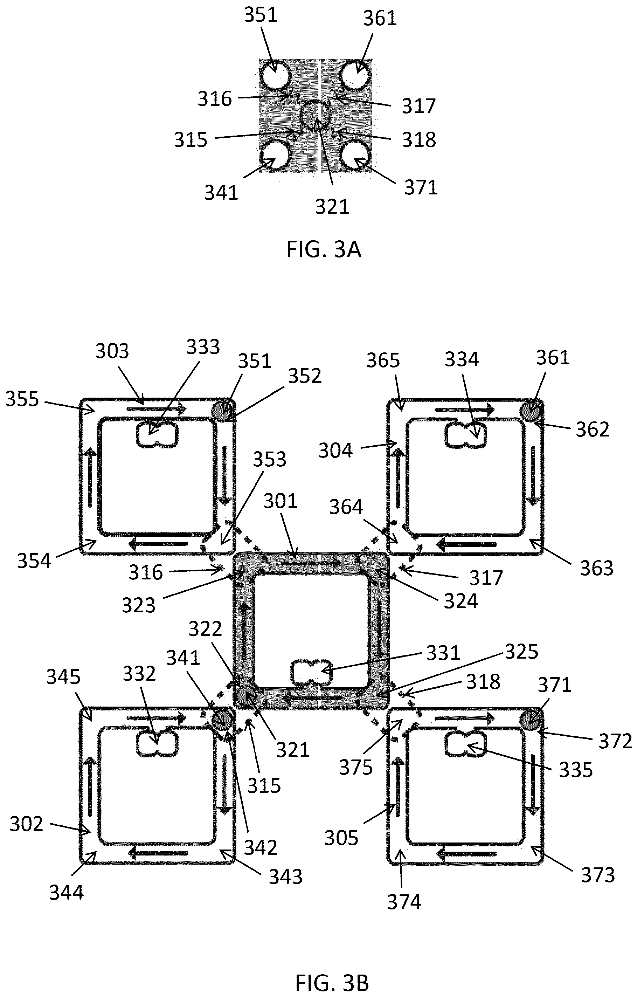

Figure 3A schematically illustrates a qubit processor having an array of qubits. There are five qubits 321, 341, 351, 361, 371 in the array in the qubit processor. The first qubit 321 can interact with the second, third, fourth and fifth qubits 341, 351, 361, 371 using first, second, third and fourth gate devices 315, 316, 317, 318 respectively.

Figure 3B schematically illustrates the qubit processor of Figure 3A at a point in time, t₁. The qubit processor includes five pre-defined tracks 301, 302, 303, 304, 305. The second, third, fourth and fifth tracks 302-305 are arranged around the first track 301 such that a corner of the second to fifth tracks 302-305 is within the quantum interaction distance of a corner of the first track 301. This enables interactions between qubits in adjacent tracks. Cross talk between the qubits in the tracks 301-305 is avoided because the qubits are spaced out. The spacing also provides additional space for classical control wiring.

In this example, the closest parts of neighbouring tracks 301-305 allow direct interactions between qubits in neighbouring tracks. In another example, the closest parts of neighbouring tracks are separated with a mediator dot in the form of an elongated quantum dot positioned between the neighbouring tracks to mediate, i.e. enable, a two qubit interaction. In any case, the closest parts of at least some neighbouring tracks are within the quantum interaction distance from each other. The use of mediator dots to mediate interactions between pairs of qubits can be implemented on any of the qubit processors described herein.

Each track includes a manipulation device 331, 332, 333, 334, 335. Each manipulation device 331-335 may include one or more manipulation elements, described in more detail in relation to Figure 2. In one example based on Figure 3B, one or more manipulation devices 331-335 may consist of one or more gate operation elements. Each gate operation element may be configured to perform the same gate operation, a different gate operation, or a variation of the same gate operation. For example, each gate operation element may be configured to perform a rotation, where the rotation is different for different gate operation elements.

In Figure 3B, each qubit 321, 341, 351, 361, 371 is in a separate track 301-305, i.e. the first qubit 321 is in the first track 301; the second qubit 341 is in the second track 302; the third qubit 351 is in the third track 303; the fourth qubit 361 is in the fourth track 304; and the fifth qubit 371 is in the fifth track 305. In this example, each qubit 321, 341, 351, 361, 371 is transferred from one location to the next location in a clockwise manner around the respective track 301-305.

Each track 301-305 is substantially square and includes four locations, one at each corner. The first track 301 includes a first location 322, a second location 323, a third location 324 and a fourth location 325. The second track 302 includes a first location 342, a second location 343, a third location 344 and a fourth location 345. The third track 303 includes a first location 352, a second location 353, a third location 354 and a fourth location 355. The fourth track 304 includes a first location 362, a second location 363, a third location 364 and a fourth location 365. The fifth track 305 includes a first location 372, a second location 373, a third location 374 and a fourth location 375.

In each track 301-305, the respective qubit 321, 341, 351, 361, 371 is received at the manipulation device 331-335, manipulated, transferred from the manipulation device 331-335 to the first location 322, 342, 352, 362, 372, transferred from the first location 322, 342, 352, 362, 372 to the second location 323, 343, 353, 363, 373, transferred from the second location 323, 343, 353, 363, 373 to the third location 324, 344, 354, 364, 374, and transferred from the third location 324, 344, 354, 364, 374 to the fourth location 325, 345, 355, 365, 375.

In one example, each qubit 321, 341, 351, 361, 371 is transferred from the fourth location 325, 345, 355, 365, 375 in the respective track 301-305 to the manipulation device 331-335, at which one or more manipulating steps are performed on the state of the qubits before being transferred from the manipulation device 331-335 to the first location 322, 342, 352, 362, 372. In another example, each qubit 321, 341, 351, 361, 371 is transferred directly from the fourth location 325, 345, 355, 365, 375 to the first location 322, 342, 352, 362, 372, without being transferred to the manipulation device 331-335. In a further example, each qubit 321, 341, 351, 361, 371 is transferred to the manipulation device 331-335 but no manipulation step is performed at the manipulation device.

At the first gate device 315, the first location 322 of the first track 301 and the first location 342 of the second track 302 are positioned within the quantum interaction distance. At the second gate device 316, the second location 323 of the first track 301 and the second location 353 of the third track 303 are positioned within the quantum interaction distance. At the third gate device 317, the third location 324 of the first track 301 and the third location 364 of the fourth track 304 are positioned within the quantum interaction distance. At the fourth gate device 318, the fourth location 325 of the first track 301 and the fourth location 375 of the fifth track 305 are positioned within the quantum interaction distance.

At time t₁, the snapshot shown in Figure 3B, the first qubit 321 is at the first location 322 of the first track 301, and the second qubit 341 is at the first location 342 of the second track 302. Therefore, the position of the first and second qubits 321, 341 at time t₁ enables an interaction between the first and second qubits 321, 341 because they are in close proximity. Specifically, the physical separation between first and second qubits 321, 341 is less than the short-range distance required for an exchange interaction between a pair of qubits. The two qubit interaction will proceed according to the first gate device 315. The two qubit interaction is not instantaneous and will take a finite time. The time taken depends on the specifics of the interaction and each interaction may comprise a plurality of sub-interactions performed sequentially. Typically each sub-interaction may take between 1 and 50 nanoseconds. Typically, the time taken for each interaction is between 20 and 2000 nanoseconds (for silicon electron spin qubits). This range of interaction time is applicable for each of the interactions that occur at the first to fourth gate devices 315-318 described in this application. The time taken typically depends on the implementation method, i.e. the hardware used to implement the interactions between qubits.

Following the interaction between the first and second qubits 321, 341, each of the qubits 321, 341, 351, 361, 371 will be transferred from the first location 322, 342, 352, 362, 372 to the second location 323, 343, 353, 363, 373 in their respective tracks 301-305, indicated by the arrows in Figure 3B.

The first qubit 321 will be shuttled from the first to second location 322, 323 in the first track 301. The second qubit 341 will be shuttled from the first to second location 342, 343 in the second track 302. The third qubit 351 will be shuttled from the first to second location 352, 353 in the third track 303. The fourth qubit 361 will be shuttled from the first to second location 362, 363 in the fourth track 304. The fifth qubit 371 will be shuttled from the first to second location 372, 373 in the fifth track 305.

The shuttling of the qubits 321, 341, 351, 361, 371 is performed simultaneously in this example. The shuttling step takes a finite amount of time. At time t₂, where t₂ > t₁, the qubits 321, 341, 351, 361, 371 are positioned in the second locations 323, 343, 353, 363, 373. Therefore, at time t₂, the first and third qubits 321, 351 are within the quantum interaction distance. The position of the first and third qubits 321, 351 at time t₂ enables an interaction between the first and third qubits 321, 351 because they are in close proximity. The two qubit interaction will proceed according to the second gate device 316.

Following the interaction between the first and third qubits 321, 351, each of the qubits 321, 341, 351, 361, 371 will be transferred from the second location 323, 343, 353, 363, 373 to the third location 324, 344, 354, 364, 374 in their respective tracks 301-305, indicated by the arrows in Figure 3B. The transfer of qubits involves electron shuttling as described above for the transfer from the first to second locations. Again, the electron shuttling is performed synchronously.

At time t₃, where t₃ > t₂, the qubits 321, 341, 351, 361, 371 are positioned in the third locations 324, 344, 354, 364, 374 in their respective tracks 301-305. Therefore, at time t₃, the first and fourth qubits 321, 361 are within the quantum interaction distance. The position of the first and fourth qubits 321, 361 at time t₃ enables an interaction between the first and fourth qubits 321, 361 because they are in close proximity. The two qubit interaction will proceed according to the third gate device 317.

Following the interaction between the first and fourth qubits 321, 361, each of the qubits 321, 341, 351, 361, 371 will be transferred from the third location 324, 344, 354, 364, 374 to the fourth location 325, 345, 355, 365, 375 in their respective tracks 301-305, indicated by the arrows in Figure 3B. The transfer of qubits involves electron shuttling as described above for the transfer from the first to second locations. Again, the electron shuttling is performed synchronously.

At time t₄, where t₄ > t₃, the qubits 321, 341, 351, 361, 371 are positioned in the fourth locations 325, 345, 355, 365, 375. Therefore, at time t₄, the first and fifth qubits 321, 371 are within the quantum interaction distance. The position of the first and fifth qubits 321, 371 at time t₄ enables an interaction between the first and fifth qubits 321, 371 because they are in close proximity. The two qubit interaction will proceed according to the fourth gate device 318.

Following the interaction between the first and fifth qubits 321, 371, each of the qubits 321, 341, 351, 361, 371 will be transferred away from the fourth location 325, 345, 355, 365, 375 in their respective tracks 301-305. Each qubit 321, 341, 351, 361, 371 will be transferred to the manipulation device 331-335 or to the first location 322, 342, 352, 362, 372 in their respective tracks 301-305. The transfer of qubits involves electron shuttling as described above for the transfer from the first to second locations. Again, the electron shuttling is performed synchronously. In this example, at the first manipulation device, 331, the state of the first qubit 321 is read out. At the second to fifth manipulation devices, 332-335, the state of the second to fifth qubits 341, 351, 361, 371 is rotated according to a Hadamard gate. In other examples, any of the manipulation devices may initialise, read out, or operate on the state of the qubit.

At time t₅, where t₅ > t₄, the qubits 321, 341, 351, 361, 371 are positioned in the first locations 322, 342, 352, 362, 372. Therefore, at time t₅, the first and second qubits 321, 341 are within the quantum interaction distance. The positioning of the qubits 321, 341, 351, 361, 371 at time t₅ is the same as the positioning of the qubits 321, 341, 351, 361, 371 at time t₁. Therefore an interaction between the first and second qubits 321, 341 is enabled at time t₅, as described for time t₁. The passage of the qubits through the qubit processor and the interactions enabled at each location as described above repeats in a cyclic manner. In one or more further examples, there may be additional tracks, tracks of different shapes and/or additional qubits in each track.

Using the qubit processor of Figures 3A and 3B, an array of qubits can be processed. Interactions between a qubit in the array (here, the first qubit 321) and its neighbouring qubits in the array (here, the second, third, fourth and fifth qubits 341, 351, 361, 371), are enabled periodically according to the positioning of the qubits 321, 341, 351, 361, 371 within the processor. The position of the qubits 321, 341, 351, 361, 371 is set according to pre-defined tracks 301-305. In this example, there are five qubits in the array, however typically there are many more qubits in the array.

In this example, each pair of qubits that are positioned at locations enabling an interaction undergo a two-qubit interaction according to the gate device. In another example, a pair of qubits positioned at locations enabling an interaction may not interact, or one or both qubits may undergo a single-qubit operation. This is typically achieved by introducing an electrostatic barrier between the first track and the second, third, fourth or fifth track as required. The electrostatic barrier has the effect that the quantum interaction distance between the pair of qubits positioned either side of the electrostatic barrier is reduced. Therefore the pair of qubits may be physically separated by, for example, 50 nanometres, but no interaction would be enabled due to the barrier. Such a barrier can be implemented in any of the qubit processors described herein. The electrostatic barrier effectively prevents any wave function overlap even for qubits that are positioned relatively close together such that without a barrier said qubits would interact. The barrier is typically temporary such that two-qubits can be enabled or prevented according the desired circuit design. The use of an electrostatic barrier may be implemented on any of the qubit processors described herein.

In this example, the qubits are shuttled synchronously around their respective tracks. However, in another example the qubits are shuttled asynchronously, either by holding qubits in one or more tracks stationary whilst shuttling qubits in other tracks around their tracks, or by shuttling qubits around the tracks at different rates.

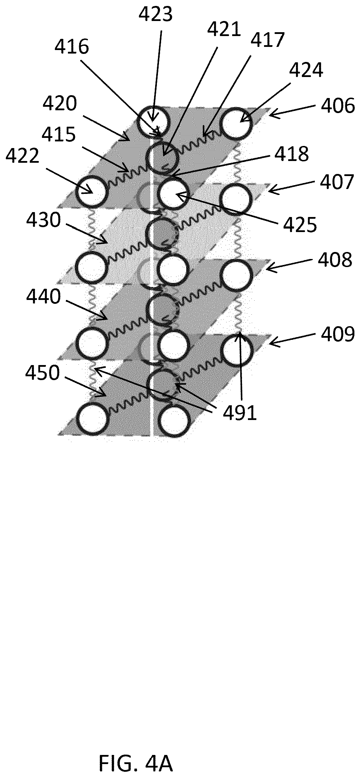

Figure 4A schematically illustrates a qubit processor having multiple arrays of qubits. Each array of qubits 420, 430, 440, 450 is schematically illustrated by a plane 406, 407, 408, 409. Each array 420, 430, 440, 450 is similar to that described in relation to Figures 3A and 3B. In Figure 4A, interactions between qubits can occur within an array 420, 430, 440, 450, as described in relation to Figures 3A and 3B, or between arrays 420, 430, 440, 450, schematically illustrated as interactions between planes 406-409.

In the first plane 406, two-qubit interactions can occur between the first qubit 421 and the second, third, fourth and fifth qubits 422, 423, 424, 425 using first, second third and fourth gate devices 415, 416, 417, 418. Corresponding interactions can occur in the second, third and fourth planes 407, 408, 409. The gate devices 415-418 enable interactions between pairs of qubits in an array for all the arrays.

Between adjacent planes, i.e. between the first plane 406 and the second plane 407, between the second plane 407 and the third plane 408, between the third plane 408 and the fourth plane 409, and between the fourth plane 409 and the first plane 406, two-qubit interactions 491 can occur between corresponding qubits. Most of the two-qubit interactions 491 are illustrated in Figure 4A. However, the two-qubit interactions between the fourth plane 409 and the first plane 406 are not shown in the figure.

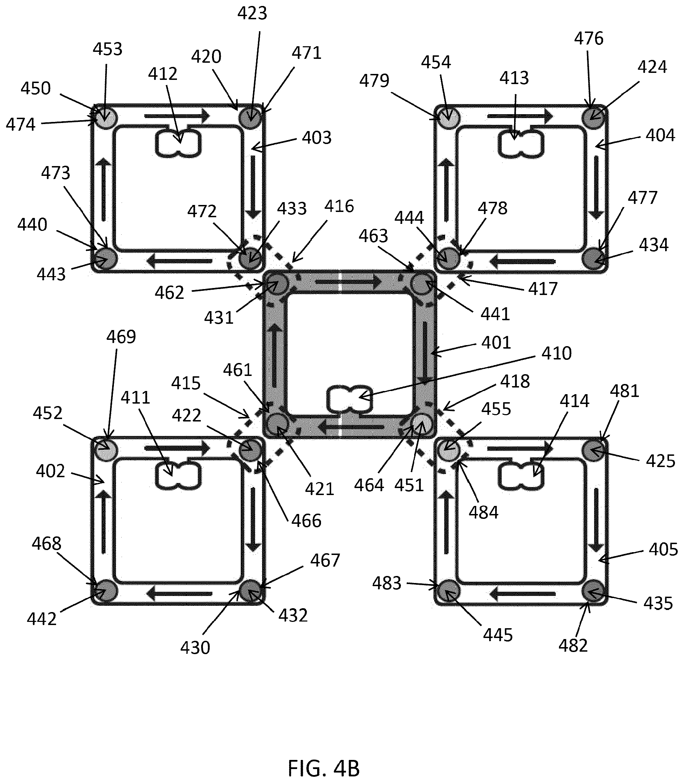

For example, a two-qubit interaction 491 is possible between the second qubit 422 in the first plurality of qubits 420, illustrated in the first plane 406, and the second qubit 432 in the second plurality of qubits 430, illustrated in the second plane 407. This is possible because the second qubits 422, 432 of the first and second plurality of qubits 420, 430 are positioned within the same track in the qubit processor (see Figure 4B).

Furthermore, two-qubit interactions can occur between any qubits, not just corresponding qubits, in adjacent planes. For simplicity, these interactions are not illustrated in Figure 4A.

Figure 4B schematically illustrates the qubit processor of Figure 4A at a point in time, t₁. The qubit processor includes five pre-defined tracks 401, 402, 403, 404, 405. Each track includes a manipulation device 410, 411, 412, 413, 414. Each manipulation device 410-414 comprises one or more manipulation elements, as described in relation to Figure 2.

The arrangement of tracks 401-405 is similar to that in Figure 3B. The second, third, fourth and fifth tracks 402-405 are arranged around the first track 401 such that a corner of the second to fifth tracks 402-405 is within the quantum interaction distance of a corner of the first track 401. This enables interactions between qubits in adjacent tracks. The interactions are defined using first, second, third and fourth gate devices 415, 416, 417, 418. In Figure 4B, there is more than one qubit in each track 401-405. In comparison with Figure 3B, the qubit density is four times higher in the qubit processor of Figure 4B because there are four times the number of qubits occupying the same space.

In another example, the second to fifth tracks 402-405 are separated from the first track 401 by mediator dots, i.e. elongated quantum dots. In said example, a first mediator dot is positioned between the closest corners of the first and second tracks, the closest corners of the first and third tracks, the closest corners of the first and fourth tracks, and the closest corners of the first and fifth tracks. This further spaces out the qubits in the qubit processor to avoid crosstalk, whilst enabling interactions between qubits in neighbouring tracks by increasing the quantum interaction distance.

Each qubit in a track 401-405 forms part of a distinct plurality of qubits. The qubit processor in Figure 4B illustrates four pluralities of qubits 420, 430, 440, 450. The first plurality of qubits 420 includes five qubits 421, 422, 423, 424, 425. The second plurality of qubits 430 includes five qubits 431, 432, 433, 434, 435. The third plurality of qubits 440 includes five qubits 441, 442, 443, 444, 445. The fourth plurality of qubits 450 includes five qubits 451, 452, 453, 454, 455.

The first pre-defined track 401 includes the first qubits 421, 431, 441, 451 from each plurality of qubits. The second pre-defined track 402 includes the second qubits 422, 432, 442, 452 from each plurality of qubits. The third pre-defined track 403 includes the third qubits 423, 433, 443, 453 from each plurality of qubits. The fourth pre-defined track 404 includes the fourth qubits 424, 434, 444, 454 from each plurality of qubits. The fifth pre-defined track 405 includes the fifth qubits 425, 435, 445, 455 from each plurality of qubits.

Each track 401-405 includes four locations, each positioned in a corner of the substantially square track 401-405. The first track 401 includes first, second, third and fourth locations 461, 462, 463, 464. The second track 402 includes first, second, third and fourth locations 466, 467, 468, 469. The third track 403 includes first, second, third and fourth locations 471, 472, 473, 474. The fourth track 404 includes first, second, third and fourth locations 476, 477, 478, 479. The fifth track 405 includes first, second, third and fourth locations 481, 482, 483, 484.

Figure 4B schematically illustrates the qubit processor at a moment in time, t₁. At time t₁, the first plurality of qubits 420 is in the first locations 461, 466, 471, 476, 481, the second plurality of qubits 430 is in the second locations 462, 467, 472, 477, 482, the third plurality of qubits 440 is in the third locations 463, 468, 473, 478, 483, and the fourth plurality of qubits 450 is in the fourth locations 464, 469, 474, 479, 484.

Therefore, an interaction is enabled between the first and second qubits 421, 422 of the first plurality of qubits 420 at time t₁ because the first and second qubits 421, 422 of the first plurality of qubits 420 are positioned within the quantum interaction distance at this moment in time. The first qubit 421 of the first plurality of qubits 420 is at the first location 461 in the first track 401 at time t₁. The second qubit 422 of the first plurality of qubits 420 is at the first location 466 in the second track 402 at time t₁. The two-qubit interaction will proceed according to the first gate device 415.

At the same time, an interaction is enabled between the first and third qubits 431, 433 of the second plurality of qubits 430 at time t₁ because the first and third qubits 431, 433 of the second plurality of qubits 430 are positioned within the quantum interaction distance at this moment in time. The first qubit 431 of the second plurality of qubits 430 is at the second location 462 in the first track 401 at time t₁. The third qubit 433 of the second plurality of qubits 430 is at the second location 472 in the third track 403 at time t₁. The two-qubit interaction will proceed according to the second gate device 416.

An interaction is also enabled between the first and fourth qubits 441, 444 of the third plurality of qubits 440 at time t₁ because the first and fourth qubits 441, 444 of the third plurality of qubits 440 are positioned within the quantum interaction distance at this moment in time. The first qubit 441 of the third plurality of qubits 440 is at the third location 463 in the first track 401 at time t₁. The fourth qubit 444 of the third plurality of qubits 440 is at the third location 478 in the fourth track 404 at time t₁. The two-qubit interaction will proceed according to the third gate device 417.

Further, an interaction is enabled between the first and fifth qubits 451, 455 of the fourth plurality of qubits 450 at time t₁ because the first and fifth qubits 451, 455 of the fourth plurality of qubits 450 are positioned within the quantum interaction distance at this moment in time. The first qubit 451 of the fourth plurality of qubits 450 is at the fourth location 464 in the first track 401 at time t₁. The fifth qubit 455 of the fourth plurality of qubits 450 is at the fourth location 484 in the fifth track 405 at time t₁. The two-qubit interaction will proceed according to the fourth gate device 418.

Following the above two-qubit interactions, each of the pluralities of qubits 420, 430, 440, 450 are shuttled clockwise along the tracks 401-405 from their location at time t₁ to the next location along the track 401-405. In this example, the shuttling is clockwise for all the tracks 401-405. In another example, the shuttling may be anti-clockwise for all the tracks. In an alternative example, the shuttling may be in one direction, for example clockwise, for the first track 401 and in the other direction, for example anti-clockwise, for the tracks 402-405 adjacent to the first track 401. The direction of movement of qubits in this example along the tracks is indicated by arrows in Figure 4B.

The shuttling is as described in relation to Figure 3B. In this example, the shuttling of all the qubits 421-425, 431-435, 441-445, 451-455 is performed simultaneously. In another example, the shuttling of some qubits may be performed after the shuttling of other qubits, for example if the interaction time at the gate devices 415-418 is different. In this example, the interaction time at each of the gate devices 415-418 is the same.

At time t₂, where t₂ > t₁, the shuttling process is complete and the qubits have been received at the next location in the track, as described for a single plurality of qubits in relation to Figure 3B.

Therefore, at time t₂, the following interactions are enabled. Each interaction described between a pair of qubits is enabled due to the pair of qubits coming into close proximity such that an exchange interaction is possible, i.e. the pair of qubits is positioned within the quantum interaction distance.

Firstly, an interaction is enabled between the first and third qubits 421, 423 of the first plurality of qubits 420 at time t₂. At time t₂, the first qubit 421 of the first plurality of qubits 420 is at the second location 462 in the first track 401. The third qubit 423 of the first plurality of qubits 420 is at the second location 472 in the third track 403.

Secondly, an interaction is enabled between the first and fourth qubits 431, 434 of the second plurality of qubits 430 at time t₂. At time t₂, the first qubit 431 of the second plurality of qubits 430 is at the third location 463 in the first track 401. The fourth qubit 434 of the second plurality of qubits 430 is at the third location 478 in the fourth track 404.

Thirdly, an interaction is enabled between the first and fifth qubits 441, 445 of the third plurality of qubits 440 at time t₂. At time t₂, the first qubit 441 of the third plurality of qubits 440 is at the fourth location 464 in the first track 401. The fifth qubit 445 of the third plurality of qubits 440 is at the fourth location 484 in the fifth track 405.

Fourthly, an interaction is enabled between the first and second qubits 451, 452 of the fourth plurality of qubits 450 at time t₂. At time t₂, the first qubit 451 of the fourth plurality of qubits 450 is at the first location 461 in the first track 401. The second qubit 452 of the fourth plurality of qubits 450 is at the first location 466 in the second track 402.

The terms "firstly", "secondly", "thirdly" and "fourthly" are used to distinguish between four different two-qubit interactions occurring within the qubit processor. In this example, the interactions occur simultaneously. In other examples the interactions may not start and/or end at the same time, but nevertheless the terms firstly, secondly, thirdly and fourthly do not imply any temporal relationship between the interactions.

Following the above two-qubit interactions, each of the pluralities of qubits 420, 430, 440, 450 are shuttled clockwise along the tracks 401-405 from their location at time t₂ to the next location along the track 401-405.

At time t₃, where t₃ > t₂, the shuttling step is complete and the qubits have been received at the next location in their respective tracks, as described for a single plurality of qubits in relation to Figure 3B.

Therefore, at time t₃, the following interactions are enabled. Each interaction described between a pair of qubits is enabled due to the pair of qubits coming into close proximity such that an exchange interaction is possible, i.e. the pair of qubits is positioned within the quantum interaction distance.

An interaction is enabled between the first and fourth qubits 421, 424 of the first plurality of qubits 420 at time t₃. At time t₃, the first qubit 421 of the first plurality of qubits 420 is at the third location 463 in the first track 401. The fourth qubit 424 of the first plurality of qubits 420 is at the third location 478 in the fourth track 404.

Another interaction is enabled between the first and fifth qubits 431, 435 of the second plurality of qubits 430 at time t₃. At time t₃, the first qubit 431 of the second plurality of qubits 430 is at the fourth location 464 in the first track 401. The fifth qubit 435 of the second plurality of qubits 430 is at the fourth location 484 in the fifth track 405.

Another interaction is enabled between the first and second qubits 441, 442 of the third plurality of qubits 440 at time t₃. At time t₃, the first qubit 441 of the third plurality of qubits 440 is at the first location 461 in the first track 401. The second qubit 442 of the third plurality of qubits 440 is at the first location 466 in the second track 402.

Another interaction is enabled between the first and third qubits 451, 453 of the fourth plurality of qubits 450 at time t₃. At time t₃, the first qubit 451 of the fourth plurality of qubits 450 is at the second location 462 in the first track 401. The third qubit 453 of the fourth plurality of qubits 450 is at the second location 472 in the third track 403.

Following the above two-qubit interactions, each of the pluralities of qubits 420, 430, 440, 450 are shuttled clockwise along the tracks 401-405 from their location at time t₃ to the next location along the track 401-405. At time t₄, where t₄ > t₃, the shuttling step is complete and the qubits have been received at the next location in their respective tracks.

Therefore, at time t₄, the following interactions are enabled. Each interaction described between a pair of qubits is enabled due to the pair of qubits coming into close proximity such that an exchange interaction is possible, i.e. the pair of qubits is positioned within the quantum interaction distance.

An interaction is enabled between the first and fifth qubits 421, 425 of the first plurality of qubits 420 at time t₄. At time t₄, the first qubit 421 of the first plurality of qubits 420 is at the fourth location 464 in the first track 401. The fifth qubit 425 of the first plurality of qubits 420 is at the fourth location 484 in the fifth track 405.

Another interaction is enabled between the first and second qubits 431, 432 of the second plurality of qubits 430 at time t₄. At time t₄, the first qubit 431 of the second plurality of qubits 430 is at the first location 461 in the first track 401. The second qubit 432 of the second plurality of qubits 430 is at the first location 466 in the second track 402.

Another interaction is enabled between the first and third qubits 441, 443 of the third plurality of qubits 440 at time t₄. At time t₄, the first qubit 441 of the third plurality of qubits 440 is at the second location 462 in the first track 401. The third qubit 443 of the third plurality of qubits 440 is at the second location 472 in the third track 403.

Another interaction is enabled between the first and fourth qubits 451, 454 of the fourth plurality of qubits 450 at time t₄. At time t₄, the first qubit 451 of the fourth plurality of qubits 450 is at the third location 463 in the first track 401. The fourth qubit 454 of the fourth plurality of qubits 450 is at the third location 478 in the fourth track 404.

Following the above two-qubit interactions, each of the pluralities of qubits 420, 430, 440, 450 are shuttled clockwise along the tracks 401-405 from their location at time t₄ to the next location along the track 401-405. At time t₅, where t₅ > t₄, the shuttling step is complete and the qubits have been received at the next location in their respective tracks.

At time t₅, the qubits 421-425, 431-435, 441-445, 451-455 are located in the same locations 461-464, 466-469, 471-474, 476-479, 481-484 within the tracks 401-405 as at time t₁. Therefore, the set of interactions enabled at time t₅ is the same as the set of interactions enabled at time t₁ described above. The qubits in each track 401-405 cycle around their respective tracks, interacting with qubits in neighbouring tracks when they are positioned sufficiently close together, i.e. within the quantum interaction distance.

Interactions occur (i) at the first gate device 415 between a qubit in the first location 461 in the first track 401 and a qubit in the first location 466 in the second track 402, (ii) at the second gate device 416 between a qubit in the second location 462 in the first track 401 and a qubit in the second location 472 in the third track 403, (iii) at the third gate device 417 between a qubit in the third location 463 in the first track 401 and a qubit in the third location 478 in the fourth track 404, and (iv) at the fourth gate device 418 between a qubit in the fourth location 464 in the first track 401 and a qubit in the fourth location 484 in the fifth track 405.

In this example, the same interactions occur at respective gate devices 415-418 for each plurality of qubits 420, 430, 440, 450. In an alternative example, one or more of the gate devices 415-418 may be reconfigured before or during the operation of a quantum circuit.

Optionally, one or more qubits may be transferred from the fourth location 464, 469, 474, 479, 484 in a track 401-405 to the manipulation device 410-414. Further, one or more qubits may be transferred from the manipulation device 410-414 to the first location 461, 466, 471, 476, 481 in a track 401-405. In one example, the qubits transferred from the fourth location 464, 469, 474, 479, 484 to the manipulation device 410-414 are subsequently transferred to the first location 461, 466, 471, 476, 481.

In another example, the qubits transferred from the manipulation device 410-414 to the first location 461, 466, 471, 476, 481 are not the specific qubits transferred from the fourth location 464, 469, 474, 479, 484 to the manipulation device 410-414. However, a qubit transferred from the manipulation device 410-414 to the first location 461, 466, 471, 476, 481 will provide the function of the qubit that was removed from the track 401-405 by being transferred from the fourth location 464, 469, 474, 479, 484 to the manipulation device 410-414. For example, qubits may be transferred into an electron reservoir from the manipulation device or out of an electron reservoir to the first location.

Thus far, the interactions described in relation to Figure 4B have been interactions between qubits within the same plurality of qubits. Such interactions involve one qubit in one track (here, the first track 401), and the corresponding qubit in an adjacent track (here, any one of the second to fifth tracks 402-405). This enables multiple arrays of qubits to be processed simultaneously in the same qubit processor. Non-interacting qubits are kept sufficiently separate from other qubits in the processor (i.e. at a separation greater than the quantum interaction distance), and qubits are brought close together (i.e. within the quantum interaction distance) periodically to interact as desired. The qubit density of the qubit processor is increased due to the presence of multiple pluralities of qubits in the same area. Shuttling around the pre-defined tracks, or loops, ensures the qubits are kept separate when not interacting.

In addition to the above-described interactions, the architecture illustrated in Figure 4B allows for interactions between qubits within the same track. These interactions involve one qubit in one plurality of qubits (say, the i-th plurality of qubits), and the corresponding qubit in an adjacent plurality of qubits (either the i-1-th plurality of qubits or the i+1-th plurality of qubits).

Direct interactions between corresponding qubits from the i-th and i+2-th pluralities of qubits is not possible because, in each track, corresponding qubit from the i+1-th plurality of qubits is situated between the qubits from the i-th and i+2-th pluralities of qubits.

Interactions between two qubits within the same track are enabled by positioning those two qubits within the quantum interaction distance along their track. The ways in which the pair of qubits may be positioned to enable an interaction are detailed in relation to Figure 1. The positioning to enable an interaction is temporary. Interactions between a pair of qubits within the same track can occur simultaneously between the corresponding pairs of qubits in the other tracks. For example, simultaneous interactions may occur between the first qubits 421, 431 of the first and second pluralities of qubits 420, 430, between the second qubits 422, 432 of the first and second pluralities of qubits 420, 430, between the third qubits 423, 433 of the first and second pluralities of qubits 420, 430, between the fourth qubits 424, 434 of the first and second pluralities of qubits 420, 430, and between the fifth qubits 425, 435 of the first and second pluralities of qubits 420, 430.

Alternatively, interactions between a pair of qubits within the same track can occur individually and locally within just one track, or within a subset of tracks.

In addition to the above-described interactions, the architecture illustrated in Figure 4B further allows for interactions between qubits from different tracks and from different pluralities of qubits. For reference, it is described above that the first qubit 421 of the first plurality of qubits 420 in the first track 401 can interact with the second to fifth qubits 422-425 of the first plurality of qubits 420 in the second to fifth tracks 402-405 respectively.

In another example, it is possible to enable an interaction between the first qubit 421 of the first plurality of qubits 420 in the first track 401 and the second to fifth qubits 432-435, 442-445, 452-455 of the second to fourth plurality of qubits 430, 440, 450 in the second to fifth tracks 402-405 respectively. This can be achieved for example by selectively shuttling qubits around some tracks and not others. In an example, the qubits 421, 431, 441, 451 in the first track 401 are shuttled clockwise around the track whilst the qubits in the second to fifth tracks 402-405 are kept stationary.

Starting from the snapshot shown in Figure 4B, this would allow the first qubit 421 of the first plurality of qubits 420 to interact with: (1) the second qubit 422 of the first plurality of qubits 420 in the second track 402; (2) the third qubit 433 of the second plurality of qubits 430 in the third track 403; (3) the fourth qubit 444 of the third plurality of qubits 440 in the fourth track 404; and (4) the fifth qubit 455 of the fourth plurality of qubits 450 in the fifth track 405. In this way, each qubit in a track can interact with any of the qubits in neighbouring tracks, i.e. tracks that come within the quantum interaction distance of said track.

Together, the possibility of inter-track and intra-track interactions provide a quasi-3D architecture as illustrated schematically in Figure 4A, although as can be seen from Figure 4B, the architecture is strictly 2D. The inter-track interactions are shown schematically as interactions within the planes 406-409. The intra-track interactions are shown schematically as interactions between the planes 406-409.

In Figure 4B, the number of qubits in each track 401-405 is the same. However, in a different example, the number of qubits may vary between tracks.

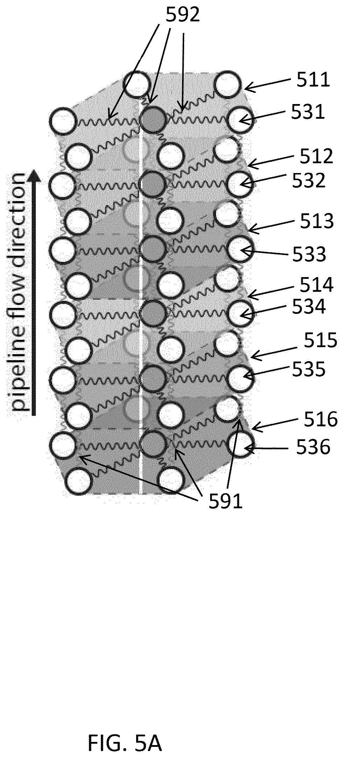

Figure 5A schematically illustrates a qubit processor having multiple arrays of qubits. Each array of qubits 511, 512, 513, 514, 515, 516 is schematically illustrated within a separate plane 531, 532, 533, 534, 535, 536. The qubit processor is schematically illustrated as stacked planes 531-536 between which, and within which, interactions can occur between pairs of qubits. The qubit processor is similar to that described in relation to Figures 4A and 4B. In addition to the illustrated inter-plane interactions 591 between corresponding qubits from adjacent arrays, the corresponding qubits from the first plane 531 and the sixth plane 536 can interact, as described in relation to Figure 4A. The available intra-plane interactions 592 are illustrated.

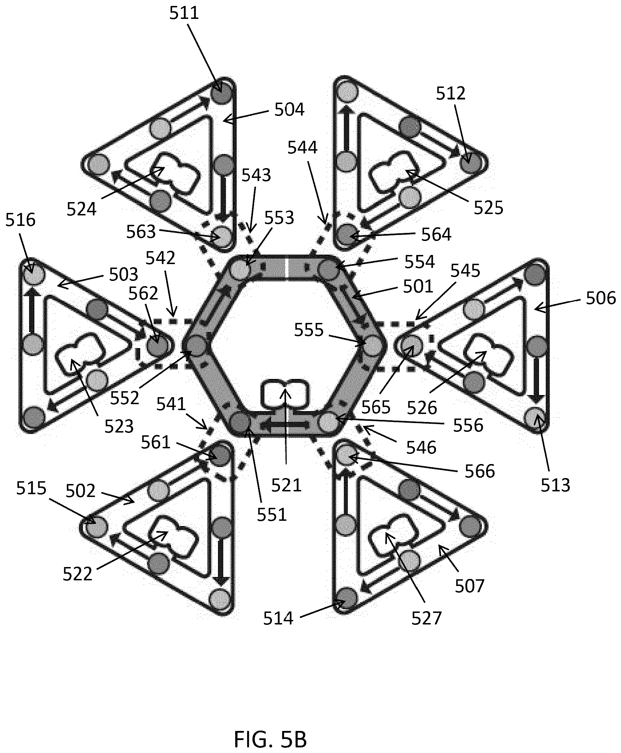

Figure 5B schematically illustrates the qubit processor of Figure 5A at time t₁. The qubit processor includes seven pre-defined tracks 501, 502, 503, 504, 505, 506, 507. Each track includes a manipulation device 521, 522, 523, 524, 525, 526, 527. There are six qubits in each track 501-507, corresponding to six separate pluralities of qubits 511, 512, 513, 514, 515, 516. Each qubit within a plurality of qubits 511-516 is located in a separate track 501-507. In this example, each plurality of qubits includes seven qubits.

In Figure 5B, the first pre-defined track 501 is substantially hexagonal. The first track 501 has six locations 551, 552, 553, 554, 555, 556, each location positioned at a corner of the hexagonal track 501. At time t₁, each qubit in the first track 501 is at a location 551-556 within the first track 501. Each qubit 551-556 is in a different plurality of qubits 511-516.

The second to seventh pre-defined tracks 502-507 in Figure 5B are substantially triangular. Each of the second to seventh pre-defined tracks 502-507 have three locations, each location positioned at a corner of the triangular tracks 502-507. At time t₁, the three locations in each triangular track 502-507 are occupied by a qubit. Additionally, the three remaining qubits in each of the second to seventh tracks 502-507 are located at intermediate locations positioned along the edges of the triangular loop.

The arrangement of the tracks 501-507 in Figure 5B is such that a qubit in the first track 501 can interact with a qubit in each of the second, third, fourth, fifth, sixth and seventh tracks 502-507.

At time t₁, an interaction is enabled between the first and second qubits of the first plurality of qubits 511. At time t₁, the first qubit of the first plurality of qubits 511 is at the first location 551 in the first track 501 and the second qubit of the first plurality of qubits 511 is at the second location 561 in the second track 502. This interaction proceeds according to the first gate device 541.

At time t₁, an interaction is enabled between the first and third qubits of the second plurality of qubits 512. At time t₁, the first qubit of the second plurality of qubits 512 is at the second location 552 in the first track 501 and the third qubit of the second plurality of qubits 512 is at the third location 562 in the third track 503. This interaction proceeds according to the second gate device 542.

At time t₁, an interaction is enabled between the first and fourth qubits of the third plurality of qubits 513. At time t₁, the first qubit of the third plurality of qubits 513 is at the third location 553 in the first track 501 and the fourth qubit of the third plurality of qubits 513 is at the third location 563 in the fourth track 504. This interaction proceeds according to the third gate device 543.

At time t₁, an interaction is enabled between the first and fifth qubits of the fourth plurality of qubits 514. At time t₁, the first qubit of the fourth plurality of qubits 514 is at the fourth location 554 in the first track 501 and the fifth qubit of the fourth plurality of qubits 514 is at the first location 564 in the fifth track 505. This interaction proceeds according to the fourth gate device 544.

At time t₁, an interaction is enabled between the first and sixth qubits of the fifth plurality of qubits 515. At time t₁, the first qubit of the fifth plurality of qubits 515 is at the fifth location 555 in the first track 501 and the sixth qubit of the fifth plurality of qubits 511 is at the first location 565 in the sixth track 506. This interaction proceeds according to the fifth gate device 545.

At time t₁, an interaction is enabled between the first and seventh qubits of the sixth plurality of qubits 516. At time t₁, the first qubit of the sixth plurality of qubits 516 is at the sixth location 556 in the first track 501 and the seventh qubit of the first plurality of qubits 516 is at the second location 566 in the seventh track 507. This interaction proceeds according to the sixth gate device 546.

In each of the second to seventh tracks 502-507, the first location is at the first corner clockwise of the manipulation device 522-527. Therefore the closest corner of the second track 502 to the first track 501 includes the second location 561 of the second track 502; the closest corner of the third track 503 to the first track 501 includes the third location 562 of the third track 503; the closest corner of the fourth track 504 to the first track 501 includes the third location 563 of the fourth track 504; the closest corner of the fifth track 505 to the first track 501 includes the first location 564 of the fifth track 505; the closest corner of the sixth track 506 to the first track 501 includes the first location 565 of the sixth track 506; and the closest corner of the seventh track 507 to the first track 501 includes the second location 566 of the seventh track 507.

After completion of the interactions described above, the qubits are shuttled clockwise around the tracks 501-507. Interactions between the six different pairs of qubits from the first plurality of qubits 511 (first and second, first and third, first and fourth, first and fifth, first and sixth, and first and seventh) will occur successively and periodically at the first gate device 541, the second gate device 542, the third gate device 543, the fourth gate device 544, the fifth gate device 545, and the sixth gate device 546 respectively. After an interaction between the first and seventh qubits from the first plurality of qubits 511 at the sixth gate device 546, the qubits will continue to be shuttled around the tracks of the qubit processor. The next interaction is between the first and second qubits from the first plurality of qubits 511 at the first gate device 541.

The second to sixth pluralities of qubits 512-516 follow the first plurality of qubits 511 around the qubit processor, with different pairs of qubits interacting at each gate device 541-546 within the qubit processor. In this way, the six arrays of qubits 511-516 are processed successively, and optionally independently, within the qubit processor. This increases the throughput of the qubit processor.

In addition to the inter-track interactions described, intra-track interactions are possible in this example. Enabling intra-track interactions by positioning a pair of qubits in a track within the quantum interaction distance provides a quasi-three-dimensional architecture, although the architecture is strictly two-dimensional.

The qubit processor of Figures 5A and 5B may be used for surface code or colour code parity checks. Each plane 431-436 schematically represents a parity check layer.

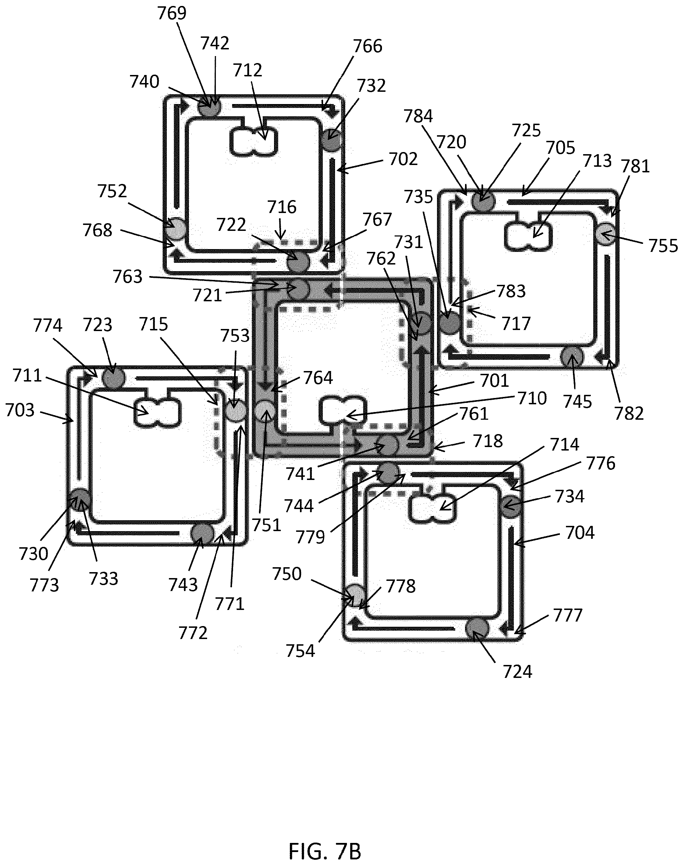

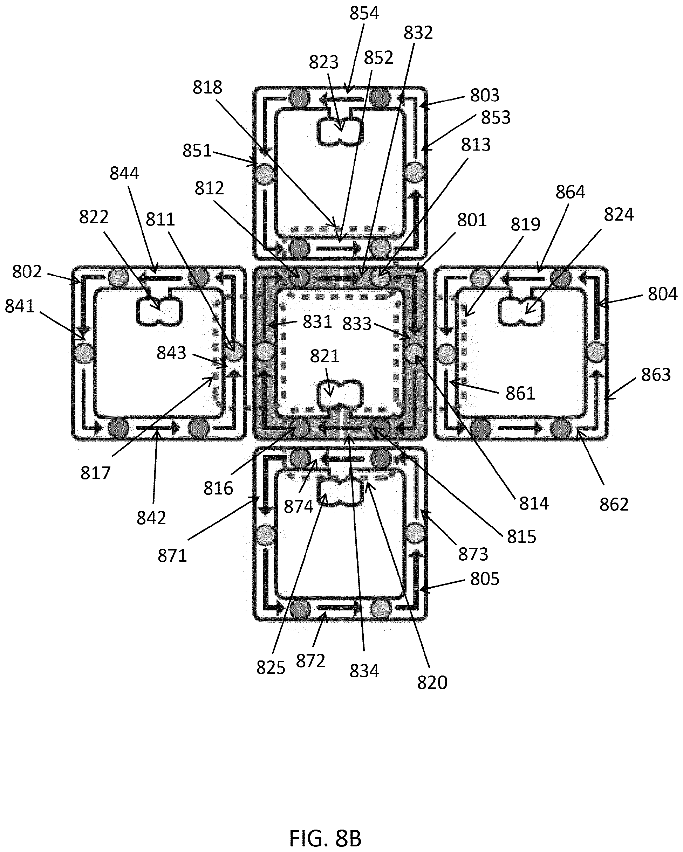

Figures 1, 2, 3B and 4B illustrate tracks that are substantially square loops. However, the tracks can be any shape, as illustrated in Figure 5B. The tracks are designed in accordance with experimental requirements which may include fitting within spatial or other design constraints, or may be related to the number and arrangement of the different arrays that can be processed by the qubit processor at any one time. The tracks are typically polygonal loops because these allow the best interaction sites at either corners (as described to now) or along straight edges (see Figures 7B and 8B for examples).

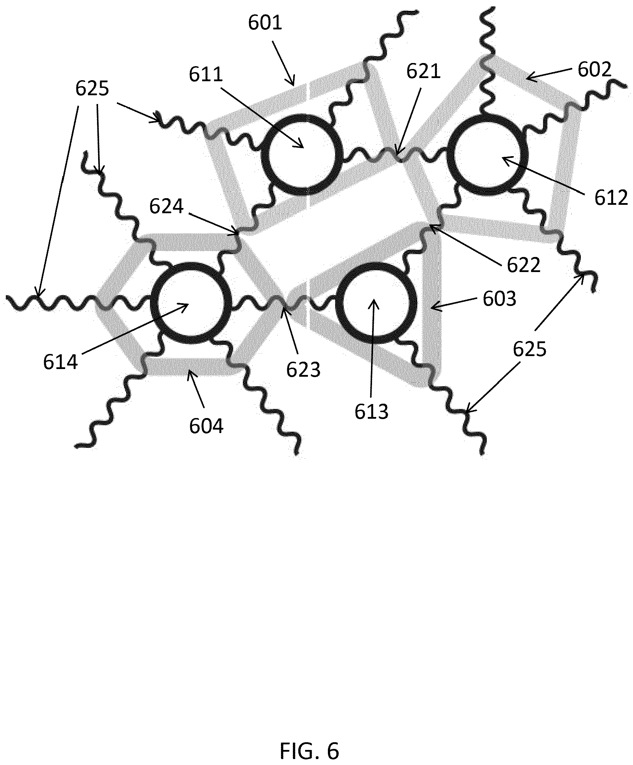

Figure 6 schematically illustrates a qubit processor including a plurality of tracks 601, 602, 603, 604, each forming a polygonal loop. In this example, the first pre-defined track 601 is a quadrilateral, the second pre-defined track 602 is a pentagon, the third pre-defined track 603 is a triangle and the fourth pre-defined track 604 is a hexagon.

The tracks 601-604 are arranged and connected such that qubits in the first and second tracks 601, 602 can interact at a first interaction location 621, qubits in the second and third tracks 602, 603 can interact at a second interaction location 622, qubits in the third and fourth tracks 603, 604 can interact at a third interaction location 623, and qubits in the first and fourth tracks 601, 604 can interact at a fourth interaction 624. Further interaction locations 625 are illustrated at which interactions between a qubit in one of the illustrated tracks 601-604 and another qubit in another (not-illustrated) track are enabled.

Pairs of qubits can interact at an interaction location 621-625 if the relevant locations in the pair of adjacent tracks are occupied. The arrangement of the tracks is such that the positioning of the locations in neighbouring tracks at the interaction location 621-625 brings qubits at those locations within the quantum interaction distance, allowing them to interact.

As described previously, the qubits 611-614 travel around their respective track 601-604. The qubits 611-614 in a track 601-604 may travel in the same direction or the opposite direction from an adjacent track 601-604.

Each track 601-604 comprises a plurality of qubits 611, 612, 613, 614. The maximum number of qubits within each track 601-604 is determined by factors including the total time taken to perform the processing steps around the loop, Tₗₒₒₚ, and the time required to perform the rate-limiting processing step, τₘₐₓ. However, the maximum number of qubits can be increased by incorporating buffering steps.

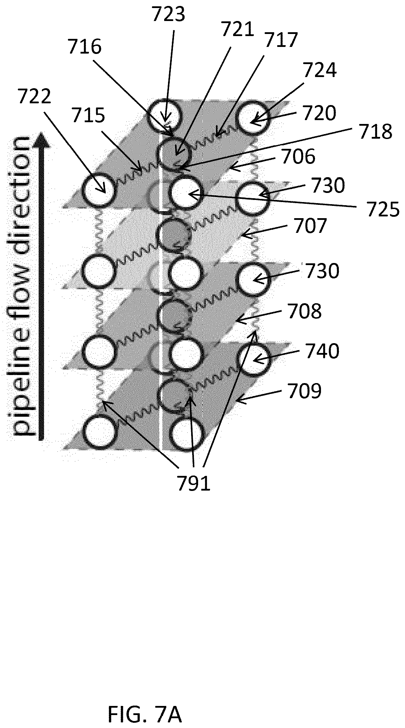

Figure 7A schematically illustrates a qubit processor having multiple arrays of qubits. The qubit processor shown in Figure 7A is similar to that of the qubit processor shown in Figure 4A. Each array of qubits 720, 730, 740, 750 is schematically illustrated by a plane 706, 707, 708, 709. Interactions between qubits can occur within, and/or between, arrays 720, 730, 740, 750.

In the first plane 706, two-qubit interactions can occur between the first qubit 721 and the second, third, fourth and fifth qubits 722, 723, 724, 725 using first, second third and fourth gate devices 715, 716, 717, 718. Corresponding interactions can occur in the second, third and fourth planes 707, 708, 709. The gate devices 715-718 enable interactions between pairs of qubits in an array for all the arrays.

Two-qubit interactions 791 can occur between corresponding qubits between adjacent planes 706-709 as described in relation to Figure 4A. Similarly to Figure 4A, the two-qubit interactions between the fourth plane 709 and the first plane 706 are not shown in the figure.

Figure 7B schematically illustrates the qubit processor of Figure 7A at a point in time, t₁. Similarly to the qubit processor shown in Figure 4B, the qubit processor includes five pre-defined tracks 701, 702, 703, 704, 705. Each track includes a manipulation device 710, 711, 712, 713, 714. Each manipulation device 710-714 comprises one or more manipulation elements, as described in relation to Figure 2.

In Figure 7B, the portion of the second to fifth tracks 702-705 that is within the quantum interaction distance from the first track 701 is extended relative to the qubit processor of Figure 4B. This enables interactions between qubits in the first track 701 and qubits in the second, third, fourth or fifth tracks 702-705 at any location within the portion of overlap between the adjacent tracks. The two-qubit interactions are defined using first, second, third and fourth gate devices 715, 716, 717, 718.

There are four pluralities of qubits 720, 730, 740, 750 in Figure 7B, each including five qubits. There are five tracks in Figure 7B 701-705, each including one qubit from each plurality of qubits 720, 730, 740, 750.

The first plurality of qubits 720 includes five qubits 721, 722, 723, 724, 725. The second plurality of qubits 730 includes five qubits 731, 732, 733, 734, 735. The third plurality of qubits 740 includes five qubits 741, 742, 743, 744, 745. The fourth plurality of qubits 750 includes five qubits 751, 752, 753, 754, 755. The first, second, third and fourth qubits from each plurality of qubits 720, 730, 740, 750 are located within the processor as described in relation to Figure 4B.

Similarly to the processor of Figure 4B, each track 701-705 includes four locations. However, in Figure 7B, each location is positioned along an edge of the substantially square track 701-705. In this example, each location extends the length of the portion of the second to fifth tracks 702-705 that is within the quantum interaction distance from the first track 701. Alternatively, each location may be positioned within a reduced length of the total overlapping portion between neighbouring tracks.

In this example, the rate-limiting step is one or more of the interactions performed in accordance with the gate devices 715-718. The effective processing time of the interactions is reduced by extending each interaction over a portion of edge of the loop and carrying out the interactions in tandem with the shuttling along the track 701.

The first track 701 includes first, second, third and fourth locations 761, 762, 763, 764. The second track 702 includes first, second, third and fourth locations 766, 767, 768, 769. The third track 703 includes first, second, third and fourth locations 771, 772, 773, 774. The fourth track 704 includes first, second, third and fourth locations 776, 777, 778, 779. The fifth track 705 includes first, second, third and fourth locations 781, 782, 783, 784.

Figure 7B schematically illustrates the qubit processor at a moment in time, t₁. At time t₁, the first qubit 721 of the first plurality of qubits 720 is in the third location 763 in the first track 701. The first qubits 731, 741, 751 of the second, third and fourth plurality of qubits 730, 740, 750 are in the second, first and fourth locations 762, 761, 764 of the first track 701 respectively. The second qubit 722 of the first plurality of qubits 720 is in the second location 767 in the second track 702. The second qubits 732, 742, 752 of the second, third and fourth plurality of qubits 730, 740, 750 are in the first, fourth and third locations 766, 769, 768 of the second track 702 respectively. The third qubit 723 of the first plurality of qubits 720 is in the fourth location 774 in the third track 703. The third qubits 733, 743, 753 of the second, third and fourth plurality of qubits 730, 740, 750 are in the third, second, and first locations 773, 772, 771 in the third track 703 respectively. The fourth qubit 724 of the first plurality of qubits 720 is in the second location 777 of the fourth track 704. The fourth qubits 734, 744, 754 of the second, third and fourth plurality of tracks 730, 740, 750 are in the first, fourth and third locations 776, 779, 778 of the fourth track 704 respectively. The fifth qubit 725 of the first plurality of qubits 720 is in the fourth location 784 of the fifth track 705. The fifth qubits 735, 745, 755 of the second, third and fourth plurality of tracks 730, 740, 750 are in the third, second and first locations 783, 782, 781 of the fifth track 705 respectively.

Therefore, at time t₁, an interaction is enabled between the first and second qubits 721, 722 of the first plurality of qubits 720 because the first and second qubits 421, 422 of the first plurality of qubits 420 are positioned within the quantum interaction distance at this moment in time. The two-qubit interaction will proceed according to the first gate device 715.

Similarly, at time t₁, an interaction is enabled between the first and fifth qubits 731, 735 of the second plurality of qubits 730. The two-qubit interaction will proceed according to the second gate device 716.

An interaction is also enabled between the first and fourth qubits 741, 744 of the third plurality of qubits 740 at time t₁. The two-qubit interaction will proceed according to the third gate device 717.

Further, an interaction is enabled between the first and third qubits 751, 753 of the fourth plurality of qubits 750 at time t₁. The two-qubit interaction will proceed according to the fourth gate device 718.

In this example, the interactions at the gate devices 715-718 are ongoing whilst the qubits are being shuttled around the tracks 701-705. Therefore it is important that the direction of motion of qubits around the first track 701 is contrary to the direction of motion of qubits around the second, third, fourth and fifth tracks 702-705. This ensures that interacting qubits are travelling in the same direction through each gate device 715-718.

In another example, the interactions at the gate devices 715-718 may occur at a particular point along the portion of the second to fifth tracks 702-705 that is within the quantum interaction distance from the first track 701.

Following the above two-qubit interactions, each of the pluralities of qubits 720, 730, 740, 750 are shuttled along the tracks 701-705 from their location at time t₁ to the next location along the track 701-705. In this example, the shuttling is anti-clockwise for the first track 701 and clockwise for the second to fifth tracks 702-705. The direction of movement of qubits is indicated by arrows in Figure 7B. The shuttling of all the qubits 721-725, 731-735, 741-745, 751-755 is performed simultaneously in this example.

At time t₂, where t₂ > t₁, the shuttling process is complete and the qubits have been received at the next location in the track, as described in relation to Figure 4B.

Therefore, at time t₂, the following interactions are enabled. An interaction is enabled between the first and third qubits 721, 723 of the first plurality of qubits 720 at time t₂. At time t₂, the first qubit 721 of the first plurality of qubits 720 is at the fourth location 764 in the first track 701. The third qubit 723 of the first plurality of qubits 720 is at the first location 771 in the third track 703.

An interaction is enabled between the first and second qubits 731, 732 of the second plurality of qubits 730 at time t₂. At time t₂, the first qubit 731 of the second plurality of qubits 730 is at the third location 763 in the first track 701. The second qubit 732 of the second plurality of qubits 730 is at the second location 767 in the second track 702.

An interaction is also enabled between the first and fifth qubits 741, 745 of the third plurality of qubits 740 at time t₂. At time t₂, the first qubit 741 of the third plurality of qubits 740 is at the second location 762 in the first track 701. The fifth qubit 745 of the third plurality of qubits 440 is at the third location 783 in the fifth track 705.

An interaction is enabled between the first and fourth qubits 751, 754 of the fourth plurality of qubits 750 at time t₂. At time t₂, the first qubit 751 of the fourth plurality of qubits 750 is at the first location 761 in the first track 701. The fourth qubit 754 of the fourth plurality of qubits 750 is at the fourth location 779 in the fourth track 704.

In this example, the interactions occur simultaneously. Following the above two-qubit interactions, each of the pluralities of qubits 720, 730, 740, 750 continue around the tracks 701-705 of the qubit processor. The qubits in the first track 701 are shuttled anti-clockwise and the qubits in the second to fifth tracks 702-705 are shuttled clockwise. When the qubits are received at the next location, the next set of four interactions is set up for four pairs of qubits, each pair of qubits within one of the pluralities of qubits 720, 730, 740, 750. The interactions are enabled according to the relative positioning of the qubits, as described in relation to Figure 4B.

The shuttling of the qubits 721-725, 731-735, 741-745, 751-755 around the tracks 701-705 can continue multiple times around the tracks 701-705. Following a full rotation around the tracks 701-705, the position of the qubits will be the same and the cycle of interactions between different pairs of qubits as described will continue in the same manner.

In the qubit processor of Figure 7B, interactions occur (i) at the first gate device 715 between a qubit in the third location 763 in the first track 701 and a qubit in the second location 767 in the second track 702, (ii) at the second gate device 716 between a qubit in the second location 762 in the first track 701 and a qubit in the third location 783 in the fifth track 705, (iii) at the third gate device 717 between a qubit in the first location 761 in the first track 701 and a qubit in the fourth location 779 in the fourth track 704, and (iv) at the fourth gate device 718 between a qubit in the fourth location 764 in the first track 701 and a qubit in the first location 771 in the third track 703.

In this example, the same interactions occur at respective gate devices 715-718 for each plurality of qubits 720, 730, 740, 750. In an alternative example, one or more of the gate devices 715-718 may be reconfigured before or during the operation of a quantum circuit.

Optionally, one or more qubits may be transferred from the fourth location 764, 769, 774, 779, 784 in a track 701-705 to the manipulation device 710-714. Further, one or more qubits may be transferred from the manipulation device 710-714 to the first location 761, 766, 771, 776, 781 in a track 701-705. In one example, the qubits transferred from the fourth location 764, 769, 774, 779, 784 to the manipulation device 710-714 are subsequently transferred to the first location 761, 766, 771, 776, 781.

Similarly to the architecture shown in Figure 4B, the architecture illustrated in Figure 7B also allows for interactions between qubits within the same track. These interactions involve one qubit in one plurality of qubits (say, the i-th plurality of qubits), and the corresponding qubit in an adjacent plurality of qubits (either the i-1-th plurality of qubits or the i+1-th plurality of qubits). Intra-track interactions are described further in relation to Figure 4B.

Further arrangements of tracks in the qubit processor are possible. In an example, one or more corners or edges of a track may be designed to be a non-interacting region. In another example, the qubit processor comprises first, second, third and fourth substantially square tracks arranged similarly to the first to fourth tracks in Figure 7B, and there is no fifth track neighbouring the first track.

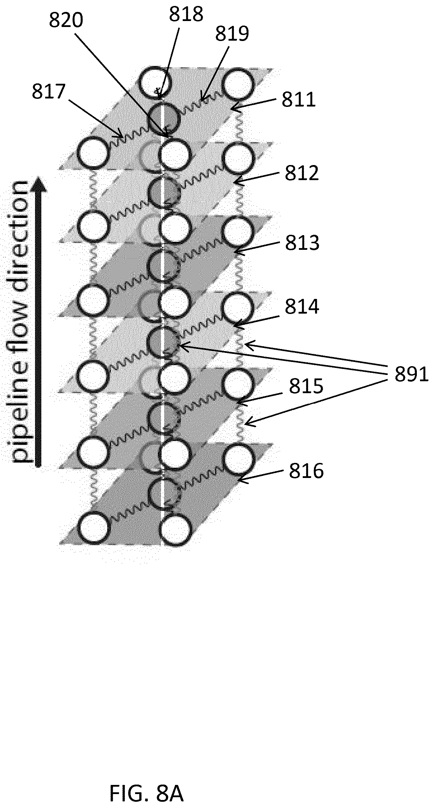

Figure 8A schematically illustrates a qubit processor having multiple arrays of qubits. The qubit processor shown in Figure 8A is similar to that of the qubit processor of Figure 7A. Each array of qubits 811, 812, 813, 814, 815, 816 is schematically illustrated by a plane. Interactions between qubits can occur within, and/or between, arrays 811-816.

Two-qubit interactions can occur between neighbouring qubits within each array 811-816 using first, second third and fourth gate devices 817, 818, 819, 820. The gate devices 817-820 enable interactions between pairs of qubits in an array for all the arrays. Two-qubit interactions 891 can occur between corresponding qubits between adjacent planes as described in relation to Figure 4A.

Figure 8B schematically illustrates the qubit processor of Figure 8A at a point in time, t₁. The qubit processor includes five tracks 801, 802, 803, 804, 805. Each track includes a manipulation device 821, 822, 823, 824, 825. Each track is occupied by six qubits, one from each of the plurality of qubits 811-816.

In Figure 8B, each track 801-805 has four locations 831-834, 841-844, 851-854, 861-864, 871-874, each along an edge of the substantially square loop forming each track 801-805.

In this example, the rate-limiting step is one or more of the interactions performed in accordance with the gate devices 817-820. The effective processing time of the interactions is reduced by extending each interaction over substantially a whole edge of the loop and carrying out the interactions at the same time as shuttling the qubits along the track 801.

In this example, the interaction is effectively decomposed into a plurality of sub-interactions performed sequentially, and the shuttling is decomposed into a plurality of sub-shuttling steps. The interaction proceeds by alternating sub-interaction with sub-shuttling steps wherein each sub-shuttling step involves shuttling the qubits along the track by a small amount such that the qubits continue to be transferred around the track but are not separated from the other qubits in the interacting pair whilst the interaction is ongoing.

In another example, the sub-interactions and sub-shuttling steps can be performed in parallel to further reduce the qubit processing time.

In this example, the interactions at the gate devices 817-820 are ongoing whilst the pluralities of qubits 811-816 are being shuttled around the tracks 801-805. Therefore it is important that the direction of motion of qubits around the first track 801 is contrary to the direction of motion of qubits around the second, third, fourth and fifth tracks 802-805. This ensures that interacting qubits are travelling in the same direction through each gate device 817-820. In this example, the qubits are shuttled around the first track 801 clockwise, and the qubits are shuttled around each of the second, third, fourth and fifth tracks 802-805 anti-clockwise. The direction of motion of qubits around each track is indicated by arrows in the figure.

The qubits in each track 801-805 proceed around the track in order, interacting with other qubits when brought within the quantum interaction distance due to the arrangement of the tracks 801-805.

At time t₁, an interaction is enabled between the first and second qubits of the first plurality of qubits 811 at the first gate device 817. The first qubit of the first plurality of qubits 811 is in the first location 831 of the first track 801 and the second qubit of the first plurality of qubits 811 is in the third location 843 of the second track 802. The first and second qubits of the first plurality of qubits 811 are approximately in the middle of their respective locations 831, 843 along the edges of the tracks 801, 802. The pair of qubits is deliberately positioned at the same place along the edges of the tracks 801, 802 to ensure strong coupling during the interaction.

As time progresses, the interaction between the first and second qubits of the first plurality of qubits 811 at the first gate device 817 will continue as the qubits are shuttled along their respective tracks 801, 802 until the first and second qubits of the first plurality of qubits 811 leave their respective locations 831, 843. The qubits will continue to be transferred along the tracks. The first qubit of the first plurality of qubits 811 will go on to interact with the third qubit of the first plurality of qubits 811 at the second gate device 818.

At time t₁, an interaction is enabled between the first and third qubits of the second and third pluralities of qubits 812, 813 at the second gate device 818. The first qubits of the second and third pluralities of qubits 812, 813 are in the second location 832 of the first track 801 and the third qubits of the second and third pluralities of qubits 812, 813 are in the second location 852 of the third track 803. The first and third qubits of the second plurality of qubits 812 are approximately at the first end of their respective locations 832, 852 along the edges of the tracks 801, 803. The first and third qubits of the third plurality of qubits 813 are approximately at the second end of their respective locations 832, 852 along the edges of the tracks 801, 803. The second end is further clockwise along the first track 801 than the first end. Each pair of qubits is deliberately positioned at the same place along the edges of the tracks 801, 802 to ensure strong coupling during the interaction.

As time progresses, the interaction between the pair of qubits in the third plurality of qubits 813 will complete whilst the interaction between the pair of qubits in the second plurality of qubits 812 will continue. The first qubit of the third plurality of qubits 813 will go on to interact with the fourth qubit of the third plurality of qubits 813 at the third gate device 819. Meanwhile, an interaction between a pair of qubits in the first plurality of qubits 811 at the second gate device 818 will begin whilst the pair of qubits in the second plurality of qubits 812 is still undergoing an interaction at the second gate device 818.

At time t₁, an interaction is enabled between the first and fourth qubits of the fourth plurality of qubits 814 at the third gate device 819. The first qubit of the fourth plurality of qubits 814 is in the third location 833 of the first track 801 and the fourth qubit of the fourth plurality of qubits 814 is in the first location 861 of the fourth track 804. The first and fourth qubits of the fourth plurality of qubits 814 are approximately in the middle of their respective locations 833, 861 along the edges of the tracks 801, 804. The pair of qubits is deliberately positioned at the same place along the edges of the tracks 801, 804 to ensure strong coupling during the interaction.

As time progresses, the interaction between the first and fourth qubits of the fourth plurality of qubits 814 at the third gate device 819 will continue as the qubits are shuttled along their respective tracks 801, 804 until the first and fourth qubits of the fourth plurality of qubits 814 leave their respective locations 833, 861. The qubits will continue to be transferred along the tracks. The first qubit of the fourth plurality of qubits 814 will go on to interact with the fifth qubit of the fourth plurality of qubits 814 at the fourth gate device 820.

At time t₁, an interaction is enabled between the first and fifth qubits of the fifth and sixth pluralities of qubits 815, 816 at the fourth gate device 820. The first qubits of the fifth and sixth pluralities of qubits 815, 816 are in the fourth location 834 of the first track 801 and the fifth qubits of the fifth and sixth pluralities of qubits 815, 816 are in the fourth location 874 of the fifth track 805. The first and fifth qubits of the fifth plurality of qubits 815 are approximately at the first end of their respective locations 834, 874 along the edges of the tracks 801, 805. The first and fifth qubits of the sixth plurality of qubits 816 are approximately at the second end of their respective locations 834, 874 along the edges of the tracks 801, 805.

The second end is further clockwise along the first track 801 than the first end. Each pair of qubits is deliberately positioned at the same place along the edges of the tracks 801, 805 to ensure strong coupling during the interaction.

As time progresses, the interaction between the pair of qubits in the sixth plurality of qubits 816 will complete whilst the interaction between the pair of qubits in the second plurality of qubits 815 will continue. The first qubit of the sixth plurality of qubits 816 will go on to interact with the second qubit of the sixth plurality of qubits 816 at the first gate device 817. Meanwhile, an interaction between a pair of qubits in the fourth plurality of qubits 814 at the fourth gate device 820 will begin whilst the pair of qubits in the fifth plurality of qubits 815 is still undergoing an interaction at the fourth gate device 820.

The qubits will continue around the tracks, with pairs of qubits interacting whenever a pair is within the quantum interaction distance. In addition to the inter-track interactions, intra-track interactions are possible.

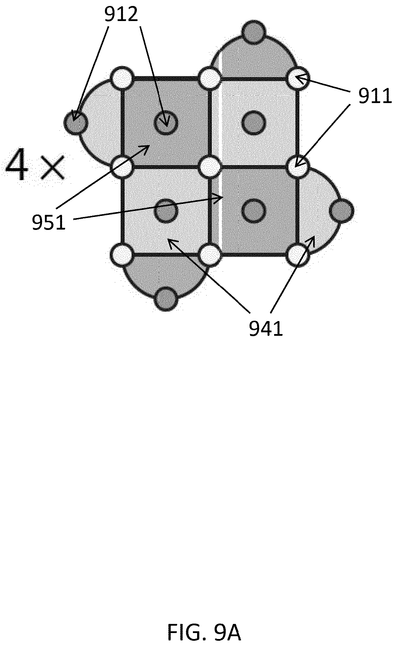

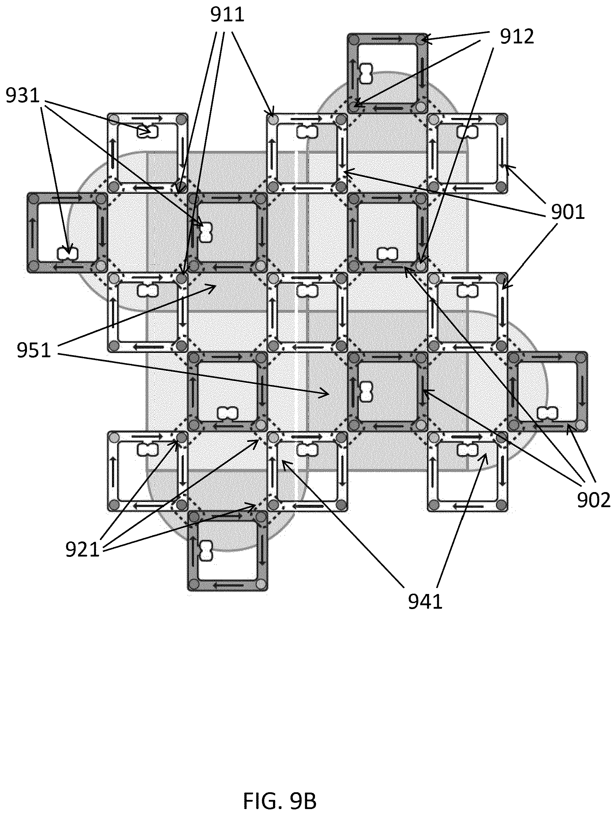

Figure 9A schematically illustrates a qubit processor for performing parity checks. The qubit processor comprises alternating data qubits 911 and ancilla qubits 912. The qubit processor implements surface code, in which X checks 941 and Z checks 951 are performed. Figure 9A depicts a two-dimensional plane around which a two-dimensional array of qubits can be transferred and allowed to interact. However, as described in relation to Figure 9B, the qubit processor can schematically be illustrated to comprise further identical planes stacked vertically, indicating the ability to interact between arrays of qubits, not only between qubits within a single array.

Figure 9B schematically illustrates the qubit processor of Figure 8B. The qubit processor comprises a plurality of tracks 901, 902. Data qubits 911 are transferred around data tracks 901; ancilla qubits 912 are transferred around ancilla tracks 902. Each track 901, 902 comprises four locations at the corners of the substantially square tracks 901, 902. There is a gate device 921 at each location. Each track 901, 902 also comprises a manipulation device 931.

In this example, the data qubits 911 proceed clockwise around the data tracks 901 and the ancilla qubits 912 proceed clockwise around the ancilla tracks 902. In another example, the data qubits 911 may proceed in the opposite direction from the ancilla qubits 912 around their respective tracks 901, 902. The data and ancilla qubits 911, 912 interact cyclically, performing X checks 941 and Z checks 951.

In this example, the tracks 901, 902 are substantially square and arranged in a uniform array. This is due to the particular characteristics desirable for a surface code architecture. In other examples, the tracks 901, 902 can be any polygonal shape and arranged in any manner desired by the experimentalist.

In this example, each of the data tracks 901 are substantially similar to the other data tracks 901 and the data qubits 911 are manipulated simultaneously across the qubit processor. The manipulation device in one or more data tracks 901 has an initialisation function and/or a gate operation function. The manipulation device in these data tracks 901 may not have a readout function because the state of the qubits in these tracks may not be directly measured. Typically the state of these qubits may be indirectly measured, for example by measuring ancilla qubits 912.

Similarly to the data tracks 901, each of the ancilla tracks 902 are substantially similar to the other ancilla tracks 902 and the ancilla qubits 912 are manipulated simultaneously across the qubit processor. The manipulation device in one or more ancilla tracks 902 has a readout function and/or a gate operation function. In practice, in every ancilla track 902 the manipulation device would have an readout and an initialisation function. The simultaneous control of a plurality of data qubits 911 and a plurality of ancilla qubits 912 advantageously reduces the number of control lines required and improves the efficiency of the qubit processor.

In another example, one or more data qubits 911 in one or more data tracks 901 may interact, or be manipulated, or be shuttled along the track, separately from other data qubits 911. Similarly, one or more ancilla qubits 912 in one or more ancilla tracks 902 may interact, or be manipulated, or be shuttled along the track, separately from other ancilla qubits 912.

Each of the qubit processors illustrated schematically in this application illustrate portions of qubit processors. Each of the described portions is designed such that the architecture is readily scalable.

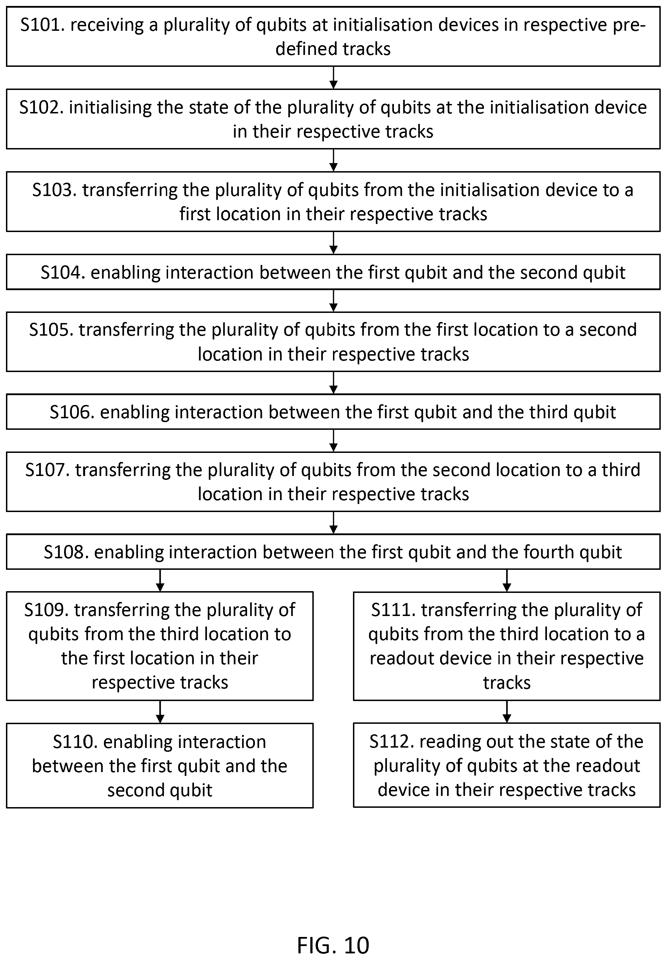

Figure 10 is a flow chart describing a qubit processing method. In step S101, a plurality of qubits are received at manipulation devices in respective pre-defined tracks. Receiving a plurality of qubits at manipulation devices in respective pre-defined tracks comprises: receiving a first qubit at a manipulation device in a first pre-defined track; receiving a second qubit at a manipulation device in a second pre-defined track, wherein at least a portion of the second track is within a quantum interaction distance from the first track; receiving a third qubit at a manipulation device in a third pre-defined track, wherein at least a portion of the third track is within the quantum interaction distance from the first track; and receiving a fourth qubit at a manipulation device in a fourth pre-defined track, wherein at least a portion of the fourth track is within the quantum interaction distance from the first track.

In this example, there are four tracks arranged such that the first track is surrounded by the second, third and fourth tracks. At least a portion of each of the second, third and fourth tracks is within the quantum interaction distance from the first track. At least another portion of each of the second, third and fourth tracks is outside the quantum interaction distance from the first track. In this example, the portion of the second to fourth tracks within the quantum interaction distance from the first track is a corner of the track.

In step S102, the state of the plurality of qubits is manipulated at the manipulation device in their respective tracks. Manipulating the state of the plurality of qubits at the manipulation device in their respective tracks comprises: manipulating the state of the first qubit at the manipulation device in the first track; manipulating the state of the second qubit at the manipulation device in the second track; manipulating the state of the third qubit at the manipulation device in the third track; and manipulating the state of the fourth qubit at the manipulation device in the fourth track.

Manipulating the state of a qubit comprises initialising the state of the qubit, reading out the state of the qubit and/or performing a single qubit operation on the state of the qubit.

In step S103, the plurality of qubits are transferred from the manipulation device to a first location in their respective tracks. Transferring the plurality of qubits from the manipulation device to a first location in their respective tracks comprises: transferring the first qubit from the manipulation device in the first track to the first location in the first track; transferring the second qubit from the manipulation device in the second track to the first location in the second track; transferring the third qubit from the manipulation device in the third track to the first location in the third track; and transferring the fourth qubit from the manipulation device in the fourth track to the fourth location in the first track.

In step S104, an interaction is enabled between the first qubit and the second qubit. The interaction is enabled when the first qubit is at the first location in the first track and the second qubit is at the first location in the second track by positioning the first location in the first track and the first location in the second track within the quantum interaction distance. In this example, the first location of the first track is at a corner of the first track and the first location of the second track is at a corner of the second track. The first location in the first track is closest to the second track and the first location in the second track is closest to the first track.

In step S105, the plurality of qubits are transferred from the first location to a second location in their respective tracks. Transferring the plurality of qubits from the first location to a second location in their respective tracks comprises: transferring the first qubit from the first location in the first track to the second location in the first track; transferring the second qubit from the first location in the second track to the second location in the second track; transferring the third qubit from the first location in the third track to the second location in the third track; and transferring the fourth qubit from the first location in the fourth track to the second location in the fourth track.

In step S106, an interaction is enabled between the first qubit and the third qubit. The interaction is enabled in a similar manner to that in step S104. When the first qubit is at the second location in the first track and the third qubit is at the second location in the third track, the first and third qubits are positioned within the quantum interaction distance because the second location in the first track and the second location in the third track are arranged to be within the quantum interaction distance.

In step S107, the plurality of qubits are transferred from the second location to a third location in their respective tracks. As described above in relation to step S105, each qubit is transferred within their track to the next location around the track.

In step S108, an interaction is enabled between the first qubit and the fourth qubit. The interaction is enabled in a similar manner to that in steps S104 and S106. The interaction is enabled when the first qubit is at the third location in the first track and the fourth qubit is at the third location in the fourth track because the third location in the first track and the third location in the fourth track are positioned within the quantum interaction distance.

Following step S108, either step S109 or step S111 is performed. In step S109, the plurality of qubits are transferred from the third location to the first location in their respective tracks. As described above in relation to step S105, each qubit is transferred within their track to the next location around the track.

If step S109 is performed, step S110 is performed after step S109. In step S110, an interaction is enabled between the first qubit and the second qubit when the first qubit is at the first location in the first track and the second qubit is at the first location in the second track. In this example, this is the same as step S104. Between steps S104 and S110, the first and second qubits cycle around the first and second tracks respectively once so that in step S110 the first and second qubits are in the same position as they were in step S104.

As an alternative to step S109, step S111 may be performed. In step S111, the plurality of qubits are transferred from the third location to the manipulation device in their respective tracks. This is similar to the previously described transfer steps. The first qubit is transferred from the third location in the first track to the manipulation device in the first track; the second qubit is transferred from the third location in the second track to the manipulation device in the second track; the third qubit is transferred from the third location in the third track to the manipulation device in the third track; and the fourth qubit is transferred from the third location in the fourth track to the manipulation device in the fourth track.

If step S111 is performed, step S112 is performed after step S111. In step S112, the state of each of the plurality of qubits is manipulated at the manipulation device in their respective tracks. Step S112 comprises manipulating the state of the first qubit at the manipulation device in the first track; manipulating the state of the second qubit at the manipulation device in the second track; manipulating the state of the third qubit at the manipulation device in the third track; and manipulating the state of the fourth qubit at the manipulation device in the fourth track.

Optionally, one or more qubits in the plurality of qubits may follow steps S109 and S110 whilst the remaining qubits in the plurality of qubits follow steps S111 and S112.

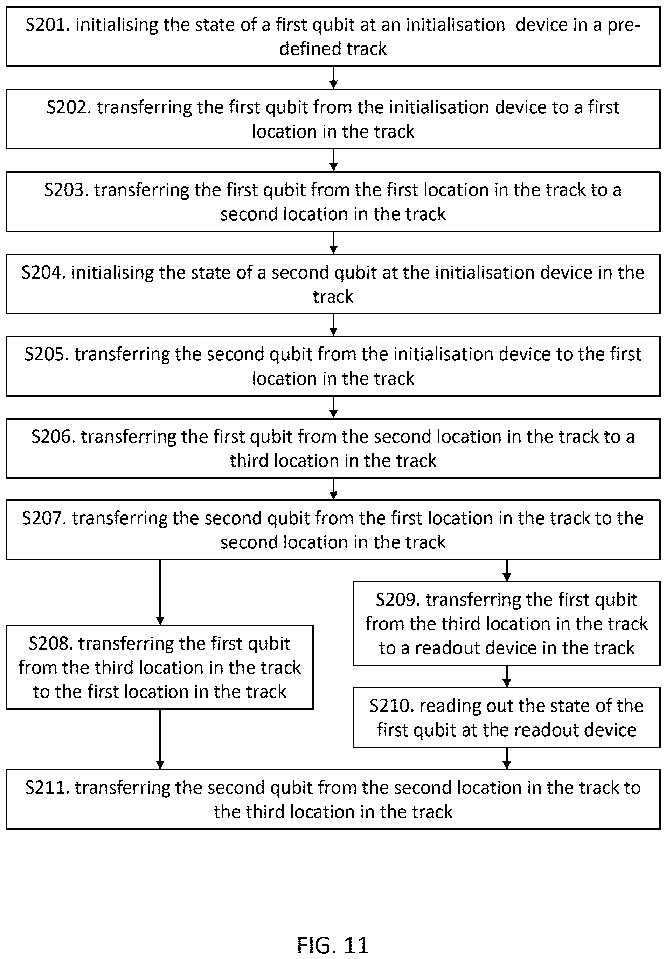

Figure 11 is a flow chart describing a qubit processing method. In step S201, the state of a first qubit is manipulated at a manipulation device in a pre-defined track. In step S202, the first qubit is transferred from the manipulation device to a first location in the track. In step S203, the first qubit is transferred from the first location in the track to a second location in the track. The first qubit is transferred from the manipulation device to the first location and from the first location to the second location using electron shuttling.

In step S204, the state of a second qubit is manipulated at the manipulation device in the track. The manipulation device is used for manipulating the state of the first and second qubits. In one example, the manipulation device comprises a plurality of manipulation elements. In that example, a first manipulation element is used to manipulate the state of the first qubit, and a second initialisation element is used to manipulate the state of the second qubit.

In step S205, the second qubit is transferred from the manipulation device to the first location in the track. In step S206, the first qubit is transferred from the second location in the track to a third location in the track. In step S207, the second qubit is transferred from the first location in the track to the second location in the track.

After step S207, either step S208 or step S209 is performed. In steps S208 and S209, the first qubit is transferred away from the third location in the track. In step S208, the first qubit is transferred from the third location in the track to the first location in the track. In step S209, the first qubit is transferred from the first location in the track to the manipulation device in the track. If step S209 is performed, step S210 is performed after S209. In step S210, the state of the first qubit is manipulated at the manipulation device. The manipulation of the state of the qubit performed in step S210 may the same as or different from the manipulation of the state of the qubit performed in step S201.

Step S211 is performed after step S208 if step S208 is performed, or after step S210 if steps S209 and S210 are performed. In step S211, the second qubit is transferred from the second location in the track to the third location in the track. After step S211, the second qubit is transferred away from the third location. The second qubit, similarly to the first qubit, will either be transferred to the first location or to the manipulation device (similarly to steps S208 and S209).

The method of Figure 11 describes the movement of a pair of qubits around a pre-defined track in a qubit processor. There may be more than two qubits in the track, proceeding around the track in order. Qubits may be transferred between the locations in the track, and optionally may be transferred to intermediate locations between the first, second and third locations. One or more qubit operations and/or interactions are enabled for the first and second qubits (and any additional qubits) on the track. The interactions may be enabled between the first and second qubits by positioning them within the quantum interaction distance along the track, or a quantum gate operation (such as a rotation or phase shift) may be performed on the first qubit or the second qubit at one or more of the locations, or an interaction may be enabled between the first qubit or the second qubit and another qubit in a neighbouring track.

The steps in Figure 11 are performed sequentially such that the first and second qubits are processed within the qubit processor concurrently. The second qubit follows the first qubit around the track, undergoing the same processing steps a short period afterwards. This increases the throughput of the qubit processor.

As will be appreciated, qubit processors are provided with a plurality of pre-defined tracks and a plurality of qubits in each track. Qubit processing methods using the qubit processors are provided in which inter-track and intra-track interactions between pairs of qubits are enabled by positioning qubits within the quantum interaction distance. Accordingly, the qubit processing methods of the invention enable a quasi-three-dimensional architecture using a qubit processor having a strictly two-dimensional architecture.

The embodiments above have been described in the context of qubits, which correspond to quantum systems having two states. The skilled person would understand, however, that the disclosures are not limited to a quantum system with only two states, and that "qudits" can be used in which the number of quantum states, "d", is an integer number that is greater than or equal to two.

Typical dimensions and time scales provided in this disclosure are in the context of qudit processors involving silicon electron spin qubits. The skilled person would understand that different dimensions and time scales may be appropriate in other realisations of a qudit processor.

## Claims

1. A method for performing quantum computations in a qudit processor, comprising the steps of:
receiving a plurality of qudits (321, 341, 351, 361) at manipulation devices in respective pre-defined separate tracks (301-304), wherein receiving a plurality of qudits at manipulation devices (331-334) in respective pre-defined separate tracks comprises:
receiving a first qudit (321) at a manipulation device (331) in a first pre-defined track (301);
receiving a second qudit (341) at a manipulation device (332) in a second pre-defined track (302), wherein at least a portion of the second track is within a quantum interaction distance from the first track;
receiving a third qudit (351) at a manipulation device (333) in a third pre-defined track (303), wherein at least a portion of the third track is within the quantum interaction distance from the first track; and
receiving a fourth qudit (361) at a manipulation device (334) in a fourth pre-defined track (304), wherein at least a portion of the fourth track is within the quantum interaction distance from the first track;
manipulating the state of the plurality of qudits at the manipulation device in their respective tracks;
transferring the plurality of qudits (321, 341, 351, 361) from the manipulation device (331-334) to a first location (322, 342, 352, 362) in their respective tracks (301-304);
enabling interaction between the first qudit (321) and the second qudit (341) when the first qudit (321) is at the first location (322) in the first track (301) and the second qudit (341) is at the first location (342) in the second track (302) by positioning the first location (322) in the first track (301) and the first location (342) in the second track (302) within the quantum interaction distance;
transferring the plurality of qudits (321, 341, 351, 361) from the first location (322, 342, 352, 362) to a second location (323, 343, 353, 363) in their respective tracks;
enabling interaction between the first qudit (321) and the third qudit (351) when the first qudit (321) is at the second location (323) in the first track (301) and the third qudit (351) is at the second location (353) in the third track (303) by positioning the second location (323) in the first track (301) and the second location (353) in the third track (303) within the quantum interaction distance;
transferring the plurality of qudits (321, 341, 351, 361) from the second location (323, 343, 353, 363) to a third location (324, 344, 354, 364) in their respective tracks;
enabling interaction between the first qudit (321) and the fourth qudit (361) when the first qudit (321) is at the third location (324) in the first track (301) and the fourth qudit (361) is at the third location (364) in the fourth track (304) by positioning the third location (324) in the first track (301) and the third location (364) in the fourth track (304) within the quantum interaction distance; and either:
transferring the plurality of qudits (321, 341, 351, 361) from the third location (324, 344, 354, 364) to the first location (322, 342, 352, 362) in their respective tracks (301-304); and
enabling interaction between the first qudit (321) and the second qudit (341) when the first qudit (321) is at the first location (322) in the first track (301) and the second qudit (341) is at the first location (342) in the second track (302); or:
transferring the plurality of qudits (321, 341, 351, 361) from the third location (324, 344, 354, 364) to the manipulation device (331-334) in their respective tracks (301-304); and
manipulating the state of the plurality of qudits (321, 341, 351, 361) at the manipulation device (331-334) in their respective tracks (301-304).

2. The method according to claim 1, wherein the plurality of qudits (321, 341, 351, 361) is a first plurality of qudits and wherein the method further comprises, after the step of transferring the first plurality of qudits (321, 341, 351, 361) from the first location (322, 342, 352, 362) to the second location (323, 343, 353, 363) in their respective tracks:
receiving a second plurality of qudits at the first locations in the respective pre-defined tracks such that each track comprises two qudits;
wherein each qudit of the second plurality of qudits follows the corresponding qudit of the first plurality of qudits in their respective tracks.

3. The method according to claim 2, further comprising:
enabling interaction between the first qudit (321) of the first plurality of qudits (321, 341, 351, 361) and the first qudit of the second plurality of qudits by positioning the first qudit of the first and second plurality of qudits within the quantum interaction distance along the first track.

4. The method according to any of the preceding claims, wherein transferring the plurality of qudits (321, 341, 351, 361) from the third location (324, 344, 354, 364) to the first location (322, 342, 352, 362) in their respective tracks comprises:
transferring the plurality of qudits (321, 341, 351, 361) from the third location (324, 344, 354, 364) to the manipulation device (331-334) in their respective tracks (301-304); and
transferring the plurality of qudits (321, 341, 351, 361) from the manipulation device (331-334) to the first location (322, 342, 352, 362) in their respective tracks (301-304).

5. The method according to any of the preceding claims, wherein each of the transferring steps comprises shuttling.

6. The method according to any of the preceding claims, wherein each of the tracks form a substantially polygonal loop.

7. The method according to claim 6, wherein one or more locations on each track are at a corner of the polygonal loop.

8. The method according to claim 6 or 7, wherein one or more locations on each track are along an edge of the polygonal loop.

9. A qudit processor configured to perform the method of any one of the preceding claims.

## Patentansprüche

1. Verfahren zum Durchführen von Quantenberechnungen in einem Qudit-Prozessor, das die folgenden Schritte umfasst:
Empfangen einer Vielzahl von Qudits (321, 341, 351, 361) an Manipulationsvorrichtungen in jeweiligen vordefinierten getrennten Bahnen (301-304), wobei Empfangen einer Vielzahl von Qudits an Manipulationsvorrichtungen (331-334) in jeweiligen vordefinierten getrennten Bahnen Folgendes umfasst:
Empfangen eines ersten Qudits (321) an einer Manipulationsvorrichtung (331) in einer ersten vordefinierten Bahn (301);
Empfangen eines zweiten Qudits (341) an einer Manipulationsvorrichtung (332) in einer zweiten vordefinierten Bahn (302), wobei mindestens ein Abschnitt der zweiten Bahn innerhalb eines Quantenwechselwirkungsabstands zur ersten Bahn liegt;
Empfangen eines dritten Qudits (351) an einer Manipulationsvorrichtung (333) in einer dritten vordefinierten Bahn (303), wobei mindestens ein Abschnitt der dritten Bahn innerhalb des Quantenwechselwirkungsabstands zur ersten Bahn liegt; und
Empfangen eines vierten Qudits (361) an einer Manipulationsvorrichtung (334) in einer vierten vordefinierten Bahn (304), wobei mindestens ein Abschnitt der vierten Bahn innerhalb des Quantenwechselwirkungsabstands zur ersten Bahn liegt;
Manipulieren des Zustands der Vielzahl von Qudits an der Manipulationsvorrichtung in ihren jeweiligen Bahnen;
Überführen der Vielzahl von Qudits (321, 341, 351, 361) von der Manipulationsvorrichtung (331-334) zu einer ersten Position (322, 342, 352, 362) in ihren jeweiligen Bahnen (301-304);
Ermöglichen einer Wechselwirkung zwischen dem ersten Qudit (321) und dem zweiten Qudit (341), wenn das erste Qudit (321) an der ersten Position (322) in der ersten Bahn (301) ist und das zweite Qudit (341) an der ersten Position (342) in der zweiten Bahn (302) ist, durch Positionieren der ersten Position (322) in der ersten Bahn (301) und der ersten Position (342) in der zweiten Bahn (302) innerhalb des Quantenwechselwirkungsabstands;
Überführen der Vielzahl von Qudits (321, 341, 351, 361) von der ersten Position (322, 342, 352, 362) zu einer zweiten Position (323, 343, 353, 363) in ihren jeweiligen Bahnen;
Ermöglichen einer Wechselwirkung zwischen dem ersten Qudit (321) und dem dritten Qudit (351), wenn das erste Qudit (321) an der zweiten Position (323) in der ersten Bahn (301) ist und das dritte Qudit (351) an der zweiten Position (353) in der dritten Bahn (303) ist, durch Positionieren der zweiten Position (323) in der ersten Bahn (301) und der zweiten Position (353) in der dritten Bahn (303) innerhalb des Quantenwechselwirkungsabstands;
Überführen der Vielzahl von Qudits (321, 341, 351, 361) von der zweiten Position (323, 343, 353, 363) zu einer dritten Position (324, 344, 354, 364) in ihren jeweiligen Bahnen;
Ermöglichen einer Wechselwirkung zwischen dem ersten Qudit (321) und dem vierten Qudit (361), wenn das erste Qudit (321) an der dritten Position (324) in der ersten Bahn (301) ist und das vierte Qudit (361) an der dritten Position (364) in der vierten Bahn (304) ist, durch Positionieren der dritten Position (324) in der ersten Bahn (301) und der dritten Position (364) in der vierten Bahn (304) innerhalb des Quantenwechselwirkungsabstands; und entweder:
Überführen der Vielzahl von Qudits (321, 341, 351, 361) von der dritten Position (324, 344, 354, 364) zu der ersten Position (322, 342, 352, 362) in ihren jeweiligen Bahnen (301-304); und
Ermöglichen einer Wechselwirkung zwischen dem ersten Qudit (321) und dem zweiten Qudit (341), wenn das erste Qudit (321) an der ersten Position (322) in der ersten Bahn (301) ist und das zweite Qudit (341) an der ersten Position (342) in der zweiten Bahn (302) ist; oder:
Überführen der Vielzahl von Qudits (321, 341, 351, 361) von der dritten Position (324, 344, 354, 364) zu der Manipulationsvorrichtung (331-334) in ihren jeweiligen Bahnen (301-304); und
Manipulieren des Zustands der Vielzahl von Qudits (321, 341, 351, 361) an der Manipulationsvorrichtung (331-334) in ihren jeweiligen Bahnen (301-304).

2. Verfahren nach Anspruch 1, wobei die Vielzahl von Qudits (321, 341, 351, 361) eine erste Vielzahl von Qudits ist, und wobei das Verfahren nach dem Schritt des Überführens der ersten Vielzahl von Qudits (321, 341, 351, 361) von der ersten Position (322, 342, 352, 362) zu der zweiten Position (323, 343, 353, 363) in ihren jeweiligen Bahnen weiter Folgendes umfasst:
Empfangen einer zweiten Vielzahl von Qudits an den ersten Positionen in den jeweiligen vordefinierten Bahnen derart, dass jede Bahn zwei Qudits umfasst;
wobei jedes Qudit der zweiten Vielzahl von Qudits dem entsprechenden Qudit der ersten Vielzahl von Qudits in ihren jeweiligen Bahnen folgt.

3. Verfahren nach Anspruch 2, weiter umfassend:
Ermöglichen einer Wechselwirkung zwischen dem ersten Qudit (321) der ersten Vielzahl von Qudits (321, 341, 351, 361) und dem ersten Qudit der zweiten Vielzahl von Qudits durch Positionieren des ersten Qudits der ersten und zweiten Vielzahl von Qudits innerhalb des Quantenwechselwirkungsabstands entlang der ersten Bahn.

4. Verfahren nach einem der vorstehenden Ansprüche, wobei Überführen der Vielzahl von Qudits (321, 341, 351, 361) von der dritten Position (324, 344, 354, 364) zu der ersten Position (322, 342, 352, 362) in ihren jeweiligen Bahnen Folgendes umfasst:
Überführen der Vielzahl von Qudits (321, 341, 351, 361) von der dritten Position (324, 344, 354, 364) zu der Manipulationsvorrichtung (331-334) in ihren jeweiligen Bahnen (301-304); und
Überführen der Vielzahl von Qudits (321, 341, 351, 361) von der Manipulationsvorrichtung (331-334) zu der ersten Position (322, 342, 352, 362) in ihren jeweiligen Bahnen (301-304).

5. Verfahren nach einem der vorstehenden Ansprüche, wobei jeder der Überführungsschritte Pendeln umfasst.

6. Verfahren nach einem der vorstehenden Ansprüche, wobei jede der Bahnen eine im Wesentlichen polygonale Schleife bildet.

7. Verfahren nach Anspruch 6, wobei eine oder mehrere Positionen auf jeder Bahn an einer Ecke der polygonalen Schleife sind.

8. Verfahren nach Anspruch 6 oder 7, wobei eine oder mehrere Positionen auf jeder Bahn entlang einer Kante der polygonalen Schleife sind.

9. Qudit-Prozessor, der so konfiguriert ist, dass er das Verfahren nach einem der vorstehenden Ansprüche durchführt.

## Revendications

1. Procédé pour réaliser des calculs quantiques dans un processeur de qudits, comprenant les étapes de :
réception d'une pluralité de qudits (321, 341, 351, 361) au niveau de dispositifs de manipulation dans des pistes (301-304) séparées prédéfinies respectives, dans laquelle la réception d'une pluralité de qudits à des dispositifs (331-334) de manipulation dans des pistes séparées prédéfinies respectives comprend :
la réception d'un premier qudit (321) à un dispositif (331) de manipulation dans une première piste (301) prédéfinie ;
la réception d'un deuxième qudit (341) à un dispositif (332) de manipulation dans une deuxième piste (302) prédéfinie, dans laquelle au moins une partie de la deuxième piste est à l'intérieur d'une distance d'interaction quantique de la première piste ;
la réception d'un troisième qudit (351) à un dispositif (333) de manipulation dans une troisième piste (303) prédéfinie, dans laquelle au moins une partie de la troisième piste est à l'intérieur de la distance d'interaction quantique de la première piste ; et
la réception d'un quatrième qudit (361) à un dispositif (334) de manipulation dans une quatrième piste (304) prédéfinie, dans laquelle au moins une partie de la quatrième piste est à l'intérieur de la distance d'interaction quantique de la première piste ;
manipulation de l'état de la pluralité de qudits au dispositif de manipulation dans leurs pistes respectives ;
transfert de la pluralité de qudits (321, 341, 351, 361) du dispositif (331-334) de manipulation vers un premier emplacement (322, 342, 352, 362) dans leurs pistes (301-304) respectives ;
activation d'une interaction entre le premier qudit (321) et le deuxième qudit (341) lorsque le premier qudit (321) est au premier emplacement (322) dans la première piste (301) et le deuxième qudit (341) est au premier emplacement (342) dans la deuxième piste (302) en positionnant le premier emplacement (322) dans la première piste (301) et le premier emplacement (342) dans la deuxième piste (302) à l'intérieur de la distance d'interaction quantique ;
transfert de la pluralité de qudits (321, 341, 351, 361) du premier emplacement (322, 342, 352, 362) vers un deuxième emplacement (323, 343, 353, 363) dans leurs pistes respectives ;
permission d'une interaction entre le premier qudit (321) et le troisième qudit (351) lorsque le premier qudit (321) est au deuxième emplacement (323) dans la première piste (301) et le troisième qudit (351) est au deuxième emplacement (353) dans la troisième piste (303) en positionnant le deuxième emplacement (323) dans la première piste (301) et le deuxième emplacement (353) dans la troisième piste (303) à l'intérieur de la distance d'interaction quantique ;
transfert de la pluralité de qudits (321, 341, 351, 361) du deuxième emplacement (323, 343, 353, 363) vers un troisième emplacement (324, 344, 354, 364) dans leurs pistes respectives ;
permission d'une interaction entre le premier qudit (321) et le quatrième qudit (361) lorsque le premier qudit (321) est au troisième emplacement (324) dans la première piste (301) et le quatrième qudit (361) est au troisième emplacement (364) dans la quatrième piste (304) en positionnant le troisième emplacement (324) dans la première piste (301) et le troisième emplacement (364) dans la quatrième piste (304) à l'intérieur de la distance d'interaction quantique ; et soit :
le transfert de la pluralité de qudits (321, 341, 351, 361) du troisième emplacement (324, 344, 354, 364) vers le premier emplacement (322, 342, 352, 362) dans leurs pistes (301-304) respectives ; et
la permission d'une interaction entre le premier qudit (321) et le deuxième qudit (341) lorsque le premier qudit (321) est au premier emplacement (322) dans la première piste (301) et le deuxième qudit (341) est au premier emplacement (342) dans la deuxième piste (302) ; ou :
le transfert de la pluralité de qudits (321, 341, 351, 361) du troisième emplacement (324, 344, 354, 364) vers le dispositif (331-334) de manipulation dans leurs pistes (301-304) respectives ; et
la manipulation de l'état de la pluralité de qudits (321, 341, 351, 361) au dispositif (331-334) de manipulation dans leurs pistes (301-304) respectives.

2. Procédé selon la revendication 1, dans lequel la pluralité de qudits (321, 341, 351, 361) est une première pluralité de qudits et dans lequel le procédé comprend en outre, après l'étape de transfert de la première pluralité de qudits (321, 341, 351, 361) du premier emplacement (322, 342, 352, 362) vers le deuxième emplacement (323, 343, 353, 363) dans leurs pistes respectives :
la réception d'une deuxième pluralité de qudits aux premiers emplacements dans les pistes prédéfinies respectives de telle sorte que chaque piste comprend deux qudits ;
dans lequel chaque qudit de la deuxième pluralité de qudits suit le qudit correspondant de la première pluralité de qudits dans leurs pistes respectives.

3. Procédé selon la revendication 2, comprenant en outre :
l'activation d'une interaction entre le premier qudit (321) de la première pluralité de qudits (321, 341, 351, 361) et le premier qudit de la deuxième pluralité de qudits en positionnant le premier qudit de la première et de la deuxième pluralité de qudits à l'intérieur de la distance d'interaction quantique le long de la première piste.

4. Procédé selon l'une quelconque des revendications précédentes, dans lequel le transfert de la pluralité de qudits (321, 341, 351, 361) du troisième emplacement (324, 344, 354, 364) vers le premier emplacement (322, 342, 352, 362) dans leurs pistes respectives comprend :
le transfert de la pluralité de qudits (321, 341, 351, 361) du troisième emplacement (324, 344, 354, 364) vers le dispositif (331-334) de manipulation dans leurs pistes (301-304) respectives ; et
le transfert de la pluralité de qudits (321, 341, 351, 361) du dispositif (331-334) de manipulation vers le premier emplacement (322, 342, 352, 362) dans leurs pistes (301-304) respectives.

5. Procédé selon l'une quelconque des revendications précédentes, dans lequel chacune des étapes de transfert comprend le va-et-vient.

6. Procédé selon l'une quelconque des revendications précédentes, dans lequel chacune des pistes forme une boucle sensiblement polygonale.

7. Procédé selon la revendication 6, dans lequel un ou plusieurs emplacements sur chaque piste sont à un coin de la boucle polygonale.

8. Procédé selon la revendication 6 ou la revendication 7, dans lequel un ou plusieurs emplacements sur chaque piste sont le long d'un côté de la boucle polygonale.

9. Processeur de qudits configuré pour réaliser le procédé selon l'une quelconque des revendications précédentes.
